# EUROPEAN PATENT APPLICATION

(11) **EP 4 726 614 A1**
(43) Date of publication of application: **15.04.2026**
(21) Application number: 24818632.2
(22) Date of filing: 04.06.2024
(51) Int. Cl.: G06N 20/00

(54) **DEVICE, METHOD, AND SYSTEM FOR MACHINE LEARNING**

(30) Priority: 09.06.2023 CN 202310684768
(71) Applicant: Sony Group Corporation, Tokyo 108-0075 (JP)
(72) Inventor: ZHENG, Ce, Beijing 100027 (CN); WANG, Xiaoxue, Beijing 100027 (CN); CUI, Tao, Beijing 100027 (CN); SUN, Chen, Beijing 100027 (CN)
(74) Representative: D Young & Co LLP
(86) International application number: PCT/CN2024/097176
(87) International publication number: WO 2024/251100

(57) **Abstract**

Disclosed are a device, a method, and a system for machine learning. In some embodiments, an electronic device used for a first UE is disclosed. The electronic device comprises a processing circuit. The processing circuit is configured to: obtain a first artificial intelligence model trained by the first UE; receive a second artificial intelligence model trained by a second UE; determine a model difference between the second artificial intelligence model and the first artificial intelligence model; and send the model difference to a federated learning server.

## Description

### CLAIM OF PRIORITY

This application claims the priority to Chinese patent application with application number 202310684768.4, titled "DEVICE, METHOD AND SYSTEM FOR MACHINE LEARNING", filed on June 9, 2023, the entire content of which is incorporated herein by reference.

### TECHNICAL FIELD

The present disclosure relates to a field of communication, and in particular, to devices, methods, and systems for machine learning.

### BACKGROUND

The application of Artificial Intelligence (AI) technology is becoming increasingly widespread. An artificial intelligence model may be trained through machine learning. Improved devices, methods, and systems for machine learning are desired.

### SUMMARY

The present disclosure provides devices, methods, and systems for machine learning.

An aspect of the present disclosure relates to an electronic device used for a first user equipment (UE). The electronic device comprises a processing circuit. The processing circuit is configured to: obtain a first artificial intelligence model trained by the first UE; receive a second artificial intelligence model trained by a second UE; determine a model difference between the second artificial intelligence model and the first artificial intelligence model; and send the model difference to a federated learning server.

Another aspect of the present disclosure relates to an electronic device used for network side. The electronic device comprises a processing circuit. The processing circuit is configured to: receive a first artificial intelligence model from a first UE, the first artificial intelligence model being trained by the first UE in a federated learning process; receive a model difference from a second UE, the model difference representing a difference between the first artificial intelligence model and a second artificial intelligence model trained by the second UE in the federated learning process; and generate a global artificial intelligence model based on aggregating at least the first artificial intelligence model and the model difference.

One aspect of the present disclosure relates to a method performed by a first UE. The method comprises: obtaining a first artificial intelligence model trained by the first UE; receiving a second artificial intelligence model trained by a second UE; determining a model difference between the second artificial intelligence model and the first artificial intelligence model; and sending the model difference to a federated learning server.

Another aspect of the present disclosure relates to a method performed by a device on network side. The method comprises: receiving a first artificial intelligence model from a first UE, the first artificial intelligence model being trained by the first UE in a federated learning process; receiving a model difference from a second UE, the model difference representing a difference between the first artificial intelligence model and a second artificial intelligence model trained by the second UE in the federated learning process; and generating a global artificial intelligence model based on aggregating at least the first artificial intelligence model and the model difference.

Another aspect of the present disclosure relates to a computer-readable storage medium having one or more instructions stored thereon, which, when executed by one or more processing circuits of an electronic device, cause the electronic device to perform any of the methods as described in the present disclosure.

Another aspect of the present disclosure relates to a computer program product comprising a computer program which, when executed by a processor, implements any of the methods as described in present disclosure.

Another aspect of the present disclosure relates to an apparatus comprising means for performing any method as described in the present disclosure.

### BRIEF DESCRIPTION OF THE DRAWINGS

The above and other purposes and advantages of the present disclosure will be further described below in conjunction with specific embodiments and with reference to the accompanying drawings. In the accompanying drawings, like or corresponding technical features or components will be represented by like or corresponding reference numerals.
FIG. 1 illustrates a schematic diagram of an exemplary system for federated learning.
FIG. 1A illustrates a schematic diagram including an exemplary system for federated learning according to some embodiments of the present disclosure.
FIG. 2 illustrates an exemplary block diagram of an electronic device according to some embodiments of the present disclosure.
FIG. 3 illustrates an exemplary block diagram of an electronic device according to some embodiments of the present disclosure.
FIG. 4 illustrates a flowchart of a method for machine learning according to some embodiments of the present disclosure.
FIG. 5 illustrates a flowchart of a method for machine learning according to some embodiments of the present disclosure.
FIG. 6 illustrates a communication process for machine learning according to some embodiments of the present disclosure.
FIG. 7 illustrates another communication process for machine learning according to some embodiments of the present disclosure.
FIG. 8 illustrates a schematic diagram of determining a model difference according to some embodiments of the present disclosure.
FIG. 9 illustrates a schematic diagram of resource allocation according to some embodiments of the present disclosure.
FIG. 10 illustrates a block diagram of a cellular system in which the technologies according to some embodiments of the present disclosure may be implemented.
FIG. 11 illustrates an exemplary process for screening UE(s) that participate as a member in federated learning according to some embodiments of the present disclosure.
FIG. 12 depicts an exemplary process of federated learning according to some embodiments of the present disclosure.

Although the embodiments described in the present disclosure may be susceptible to various modifications and alternative forms, specific embodiments thereof are shown by way of examples in the drawings and described in detail herein. It should be understood that the drawings and detailed description thereof are not intended to limit embodiments to a specific form that has been disclosed, and instead the intention is to cover all modifications, equivalents and alternatives within the spirit and scope of the claims.

### DETAILED DESCRIPTION

Exemplary embodiments of the present disclosure will be described below in conjunction with the accompanying drawings. For the sake of clarity and conciseness, not all features of the embodiments are described in the specification. It should be understood, however, that many implementation-specific settings must be made in the process of implementing the embodiments in order to achieve the specific goals of the developer, for example, to meet those restrictions related to the device and the service, and that these restrictions may vary from one implementation to another. Moreover, it should also be understood that the development work, while may be potentially very complex and time-consuming, would only be a routine undertaking for those skilled in the art who benefit from the present disclosure.

It should also be noted here that, in order to avoid obscuring the present disclosure with unnecessary details, only processing steps and/or device structures that are closely related to at least the solution according to the present disclosure are shown in the accompanying drawings, while other details that are of little relevant to the present disclosure are omitted.

### 1. Exemplary Systems

Application of artificial intelligence technology is becoming increasingly widespread. An artificial intelligence model may be trained through machine learning. Federated Learning (FL) is a distributed learning technology. In a system that adopts federated learning, each of a plurality of training devices performs training of a respective local model by using its local data as training data, respectively. Each training device may upload the respective trained local model to a server. The server aggregates a plurality of local models received from the plurality of training devices to obtain a global model. In the process of federated learning, each training device uploads the local model without having to exchange training data with the server or other training devices. Therefore, federated learning allows for training of the artificial intelligence model utilizing training capabilities and training data of a large number of users while ensuring data security and user privacy. This may help improve training efficiency as well as performance of the resultant artificial intelligence model.

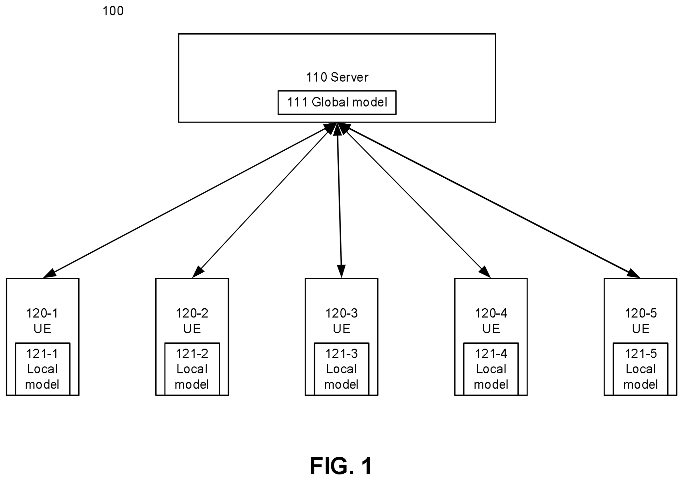

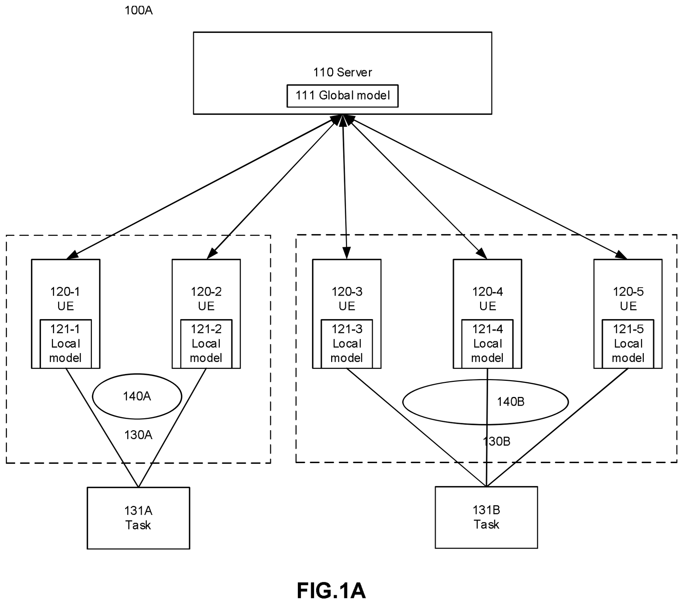

FIG. 1 illustrates a schematic diagram of an exemplary system 100 for federated learning. System 100 may include a server 110. Server 110 may serve as a server for the federated learning. System 100 may further include a plurality of UEs, 120-1 to 120-5. The plurality of UEs may be represented collectively by 120. Each UE 120 may be communicatively coupled to server 110. Each UE 120 may serve as a training device for the federated learning.

During the federated learning, the training of an artificial intelligence model may be an iterative process that includes multiple training rounds. In each training round, each UE 120 may perform training using local data of that UE to obtain a respective trained local model 121. The local data of different UEs 120 may be different, so the resultant local models 121 may be different. For example, UEs 120-1, 120-2, 120-3, 120-4, and 120-5 may obtain trained local models 121-1, 121-2, 121-3, 121-4, and 121-5, respectively. Each UE 120 may upload the trained local model 121 to server 110 via an uplink between that UE and server 110. Server 110 may aggregate a plurality of local models 121 received from individual UEs 120 to generate a global model 111.

Then, global model 111 may be distributed to each UE 120 via a downlink between server 110 and that UE 120. Based on the received global model 111, each UE 120 may update local model 121 of that UE.

In the next training round, each UE 120 may continue to train the updated local model 121 of that UE, thereby obtaining a trained local model 121. Once again, each UE 120 may upload the trained local model 121 obtained in the current training round to server 110. Server 110 may aggregate the plurality of local models 121 received from individual UEs 120 to generate global model 111.

Global model 111 may be distributed again to each UE 120 for subsequent training round(s). This process may be repeated until an end condition is reached. The performance of global model 111 may be improved by iteratively going through multiple training rounds.

As artificial intelligence technology develops, artificial intelligence models become larger and more complex. The inventors of the present application have realized that systems adopting federated learning face various challenges.

For example, uploading a complex artificial intelligence model will require a larger amount of data be transmitted. In system 100 of FIG. 1, local model 121 obtained by each UE 120 may become very large. In some cases, local model 121 may need to be represented by a large number of model parameters. In order to upload local model 121 to server 110, UE 120 needs to upload a large amount of data containing those model parameters. In most communication systems (e.g., wireless communication systems), an uplink for uploading data is limited (e.g., with a limited bandwidth, etc.). Uploading the local model may impose a significant load on the uplink. This may cause undesired congestion, latency and/or loss of data. For another example, due to different characteristics (e.g., locations, communication conditions, locally held data, etc.) of individual UEs participating in the federated learning, each UE may perform a different training task. In some scenarios, during federated learning for training a common global model for image recognition, some UEs may use facial image data to train local models, while other UEs may use vehicle image data to train local models. Direct aggregation of multiple local models that were trained for different tasks may undergrade the training performance. Additionally, there exist one or more other issues that need to be addressed.

The inventors of the present application have realized that there may be model redundancy between local models that were trained by different UEs. By exchanging local models between the UEs and removing the model redundancy prior to uploading of the models, it is possible to mitigate occupancy of uplink resources. The inventors of the present application have further realized that the multiple UEs, among which the local models are to be exchanged, may be selectively determined to maximize the removed model redundancy. In addition, the inventors of the present application have realized that, by providing high-quality communication resources for multiple UEs that generate similar local models, it is possible to improve training efficiency of the entire system. The present disclosure provides improved technologies for machine learning, including these and other aspects.

FIG. 1A illustrates a schematic diagram including an exemplary system 100A for federated learning according to some embodiments of the present disclosure. Similar to system 100, system 100A may include a server 110 and a plurality of UEs 120. Server 110 may serve as a federated learning server. The plurality of UEs 120 may serve as training devices for the federated learning.

Similar to system 100, in one training round of the federated learning, UE 120-1, 120-2, 120-3, 120-4, and 120-5 may obtain trained local models 121-1, 121-2, 121-3, 121-4, and 121-5 respectively through local model training. Unlike system 100, not all of the plurality of UEs 120-1 to 120-5 in system 100A upload respective local models. Instead, only a subset of UEs 120-1 to 120-5 are configured to upload their respective local models 121 to server 110. Each of the remaining UEs may be configured to upload a model difference between that remaining UE and a corresponding UE in the subset of UEs. The model difference may represent a non-redundant portion between two local models. In other words, each of the remaining UEs does not upload the model redundancy between the local model of that remaining UE and the local model of the corresponding UE.

By way of example without limitation, in the embodiment illustrated in FIG. 1A, UE 120-1 and UE 120-3 may be configured to upload respective local models 121-1 and 121-3 to server 110. UE 120-2 may be configured to upload, to server 110, a model difference between its respective local model 121-2 and local model 121-1 of UE 120-1. UE 120-4 may be configured to upload, to server 110, a model difference between its respective local model 121-4 and local model 121-3 of UE 120-3. UE 120-5 may be configured to upload, to server 110, a model difference between its respective local model 121-5 and local model 121-3 of UE 120-3. Since the particular UEs (e.g., UE 120-2, 120-4, 120-5) are configured to upload model difference instead of local models to server 110, the amount of data uploaded by those UEs may be significantly reduced. Accordingly, the load of the uplinks associated with those UEs may be significantly reduced.

According to some embodiments of the present disclosure, the plurality of UEs 120 that participate in the federated learning may be divided into groups. A particular UE in each group may be configured to upload its respective local model, while other UEs in that group may be configured to upload model difference between that UE and the particular UE.

The plurality of UEs 120 participating in the federated learning may be grouped according to one or more grouping criteria. In some embodiments, the one or more grouping criteria may include a spatial location of the UEs. For example, multiple UEs that are spatially close to each other may be divided into a same group. Specifically, if a distance between two UEs is less than a first predetermined distance threshold, the two UEs may be divided into a same group. For another example, multiple UEs that are close enough to a specific geographic location may be divided into a same group. Specifically, if a distance between a UE and the specific geographic location is less than a second predetermined distance threshold, that UE may be divided into a group associated with the specific geographic location. There may be multiple specific geographic locations, and each of the specific geographic locations may be any spatial location of interest.

In an alternative embodiment, the one or more grouping criteria may include a trust relationship between the plurality of UEs. In this case, multiple UEs that have established or are capable of establishing a trust relationship between each other may be divided into a same group. As an example, the establishment of the trust relationship may include establishment of a specific channel. For example, if the specific channel has been established between two UEs, it may be considered that there is a trust relationship between the two UEs. In some scenarios, the specific channel may be a sidelink between two UEs. In some scenarios, the specific channel may be a Wi-Fi link. In other scenarios, the specific channel may be any other type of link through which two UEs may communicate with each other. Additionally, the establishment of the trust relationship may further include a discovery process or an authentication process between the UEs.

In an optional embodiment, the one or more grouping criteria may include one or more attributes associated with a specific channel among the plurality of UEs. The one or more attributes may include, but are not limited to, quality of the specific channel. Specifically, if the quality of a specific channel between two UEs is higher than a predetermined threshold, the two UEs may be divided into a same group. Any suitable parameter may be used to measure the quality of the specific channel. As an example, the parameters for measuring the quality of the specific channel may include one or more of reference signal received power (RSRP), reference signal received quality (RSRQ), quality of service (QoS), or signal to interference plus noise ratio (SINR) associated with the specific channel.

In a preferred embodiment, the one or more grouping criteria may include a model distance between local models trained by the UEs. The model distance may be used to measure a degree of difference between the local models trained by two UEs. A short model distance corresponds to a small model difference. In other words, a short model distance corresponds to high model similarity. Preferably, multiple UEs that have a model distance below a predetermined model distance threshold may be divided into a same group. In this case, since multiple local models of the multiple UEs in each group have a sufficiently short model distance, the model difference to be uploaded will be sufficiently small, thereby further reducing the amount of data to be uploaded.

Those skilled in the art will understand that the one or more grouping criteria described above for grouping the plurality of UEs 120 participating in the federated learning are exemplary and non-limiting. The one or more grouping criteria may be applied individually or in combination. In some embodiments, only the grouping criterion based on the trust relationship may be applied. For example, only the sidelink connections among the plurality of UEs 120 may be considered, without considering the model distance. In other embodiments, the grouping criterion based on the model distance may be used in combination with the grouping criterion based on the spatial location, or the grouping criterion based on the trust relationship.

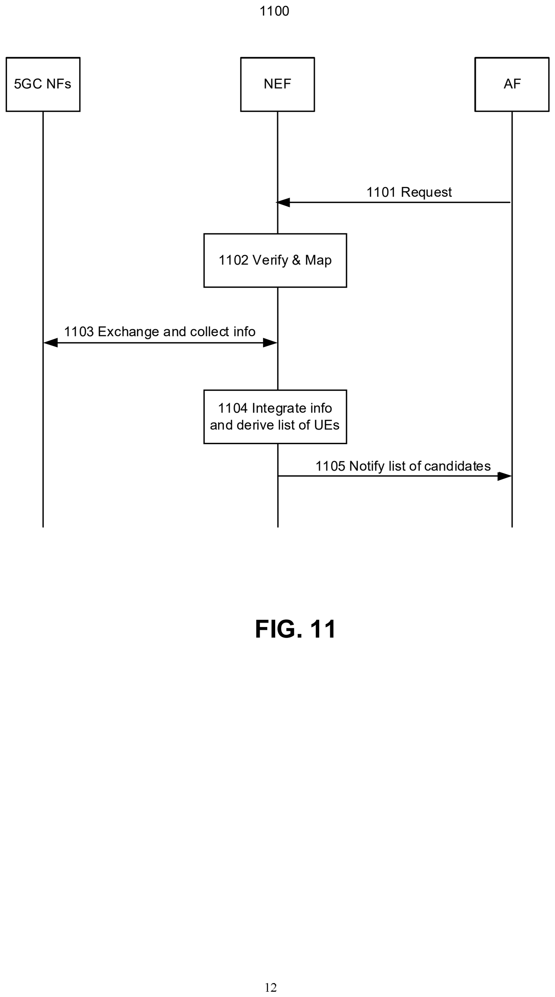

According to an embodiment of the present disclosure, the grouping of UEs may be determined by one or more entities that are associated with the federated learning. In some embodiments, an autonomous grouping method may be implemented, in which the plurality of UEs participating in federated learning autonomously determine the groups. The UE(s) may report, via one or more network-side devices (e.g., a Wi-Fi access points, a cellular base station, or a core network node), the grouping result to the federated learning server that is connected to those network-side devices. In some embodiments, a centralized grouping method may be implemented. In some scenarios, the centralized grouping method may be performed by the federated learning server. For example, when the grouping criterion based on the model distance is applied, the grouping may be performed by the federated learning server. This is because the federated learning server is able to obtain the local models trained by individual UEs and calculate the model distances. The federated learning server may reside on an application function (AF) of a cellular network, so the grouping may be performed by the AF. In some scenarios, the centralized grouping method may be performed by the network-side device (e.g., a Wi-Fi access point, a cellular base station, a core network node). For example, in the case of applying the grouping criterion based on the trust relationship, the grouping may be performed by the base station, the core network node, or the access point. Specifically, the base station (e.g., a gNB) is able to learn about sidelink connections (and additionally, quality of the sidelinks) among various UEs and perform the grouping based on such link information. In some scenarios, the federated learning server may collaborate with the network-side device (an access point, a base station, or a core network node, etc.) to perform the grouping. This allows model information collected by the federated learning server to be used in combination with the link information collected by the network-side device, such that the grouping is potentially improved. In some embodiments, the one or more grouping criteria may be performed as part of a process for screening UEs that will participate in the federated learning, as further described below with respect to FIG. 11.

By way of example and not limitation, the grouping criterion based on the model distance is applied in the embodiment illustrated in FIG. 1A. In this example, UEs 120-1 to 120-5 may be divided into two groups 130A and 130B, where group 130A includes UEs 120-1 and 120-2, and group 130B includes UEs 120-3, 120-4, and 120-5.

In the process of training the artificial intelligence model, multiple UEs that are performing a same or similar training task may obtain similar local models (i.e., having a short model distance between them). For example, if two UEs both use facial image data to train a model for image recognition, the training tasks of the two UEs are both associated with face recognition. In this case, the two local models obtained are likely to be similar. If two UEs use facial image data and vehicle image data respectively to train the model for image recognition, the training tasks of the two UEs are respectively associated with face recognition and vehicle recognition. In this case, the model difference between the two local models obtained may be large. Therefore, it is desired to divide multiple UEs with the same or similar training task into a same group. If server 110 is already aware of the training tasks of individual UEs, server 110 may pre-group the individual UEs based on the training tasks. However, in most cases, server 110 does not know the training tasks/training data of each UE. For example, server 110 may not know whether the local data of a UE is facial image data or vehicle image data. Therefore, the individual UEs may be grouped based on a comparison among the local models trained by those UEs (e.g., the local models obtained in a certain training round). The model distance between various local models may be determined by comparing the models. Based on the comparison, multiple UEs with a short model distance may be divided into the same group. Accordingly, multiple UEs with a large model distance may be divided into different groups. In some embodiments, a centralized grouping method may be adopted, in which the grouping of the plurality of UEs is determined by server 110 based on the model distances of the local models of the plurality of UEs. In some embodiments, an autonomous grouping method may be adopted, in which a UE itself determines whether the UE and another UE belong to a same group based on the model distance of the local models of the two UEs. As an example rather than limitation, in the embodiment illustrated in FIG. 1A, UEs 120-1 and 120-2 may be associated with task 131A, so these UEs are divided into a first group 130A. UEs 120-1, 120-2, and 120-3 may be associated with task 131B, which is different from task 131A, so these UEs are divided into a second group 130B.

In order to calculate the model difference, model exchange may be performed between multiple UEs in a group. Group-specific resource allocation may improve communication efficiency of each UE in each group and/or reduce communication interference across different groups. This is conducive to model exchange among UEs within the group. As an example rather than limitation, in the embodiment illustrated in FIG. 1A, a first resource set 1400A may be allocated to group 130 A and is specific to that group, while a second resource set 1400B may be allocated to group 130 B and is specific to that group. The interference across the first resource set 1400A and the second resource set 1400B may be minimized. UEs in a respective one of the groups may be configured to use a resource set that is specific to that group to communicate with UEs in that group.

The group-specific resource may be determined by the network-side device. In the example of a Wi-Fi system, the group-specific resource may be determined by an access point. In the example of a cellular system, the entity that determines the grouping (e.g., the federated learning server that resides at the AF) may communicate with a policy control function (PCF) so as to inform the base station (e.g., a gNB) of the grouping result through an authentication management function (AMF). The base station may allocate group-specific resources based on the received grouping result, for use by UEs associated with the group. Alternatively, when the grouping of the UEs is determined by the base station, the base station may allocate group-specific resources based on the grouping result determined by the base station itself. The base station may include configuration that is associated with such resource allocation in an appropriate signaling, to notify one or more UEs in the respective group. Preferably, the signaling used may include RRC signaling.

It should be understood that the embodiment illustrated in FIG. 1A is merely exemplary. Each of one or more aspects of the embodiment may be implemented individually or in combination. It should also be understood that, although FIG. 1A is described for federated learning, the technology of the present disclosure may alternatively be applied in other distributed machine learning systems. In some alternative embodiments, system 100A may include more or fewer training devices (e.g., UEs 120). In some alternative embodiments, the grouping of the UEs may be different from the embodiment illustrated in FIG. 1A. Additional details with respect to the technology of the present disclosure will be further described below.

### 2. Exemplary Devices

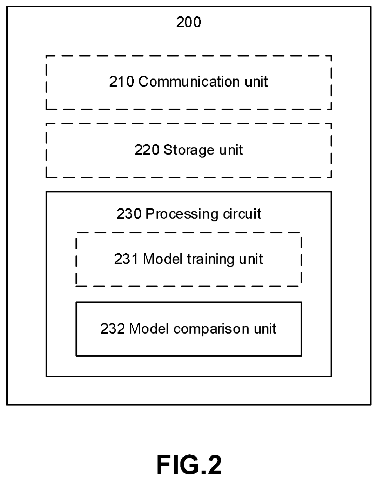

FIG. 2 illustrates an exemplary block diagram of an electronic device 200 according to some embodiments of the present disclosure. Electronic device 200 may be implemented on user side or client side of a system. Therefore, electronic device 200 may be referred to as a user-side device. Electronic device 200 may be used to implement or control a UE (e.g., UE 120 in FIG. 1A) for performing training in a distributed training system. The UE may be implemented as various types of clients. In some embodiments, the UE may be implemented as a client in a server-client architecture. In some embodiments, the UE may be implemented as a user terminal in a cellular network. In some embodiments, the UE may be implemented as a user terminal in a Wi-Fi system. Electronic device 200 may be used to perform one or more operations related to the UE described herein. Specifically, electronic device 200 may be implemented as the UE itself, as a part of the UE, or as a control device for controlling the UE. For example, electronic device 200 may be implemented as a chip for controlling the UE. In some embodiments of the present disclosure, electronic device 200 is implemented as the UE itself, which is merely for the convenience of description and is not intended to be limiting.

According to some embodiments of the present disclosure, electronic device 200 may include a communication unit 210, a storage unit 220, and a processing circuit 230.

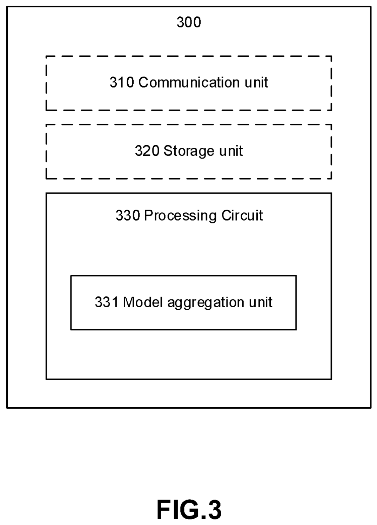

Communication unit 210 of electronic device 200 may be used to receive or send wired transmission or radio transmission. Communication unit 210 may be used to establish and maintain one or more communication links. Each communication link may carry associated transmission. The one or more communication links may include a communication link between electronic device 200 and a network-side device (for example, electronic device 300 described with respect to FIG. 3, including but not limited to a base station and/or a federated learning server), such as an uplink or a downlink between electronic device 200 and the network-side device. The one or more communication links may further include a communication link between electronic device 200 and an electronic device associated with other UEs (for example, another electronic device 200 associated with other UEs), such as a sidelink (for example, side-link) among multiple UEs. In some embodiments of the present disclosure, communication unit 210 may perform functions such as up-conversion, digital-to-analog conversion on the sent signal and/or perform functions such as down-conversion, analog-to-digital conversion on the received signal. Communication unit 210 may be implemented using various technologies. For example, communication unit 210 may be implemented as a communication interface component such as an antenna device, a radio frequency circuit, and a partial baseband processing circuit. In FIG. 2, communication unit 210 is drawn with dashed lines because communication unit 210 may alternatively be located within processing circuit 230 or external to electronic device 200.

Storage unit 220 of electronic device 200 may store information generated by processing circuit 230, information received from other devices through communication unit 210 or information to be sent to other devices, programs, machine codes and data used for operations of electronic device 200, etc. According to some embodiments of the present disclosure, storage unit 220 may store training data of electronic device 200, the local model obtained by electronic device 200, the determined model difference, the global model received by electronic device 200, resource configuration data and/or other associated data. Storage unit 220 may be a volatile memory and/or a non-volatile memory. For example, storage unit 220 may include, but is not limited to, a random access memory (RAM), a dynamic random access memory (DRAM), a static random access memory (SRAM), a read-only memory (ROM) and a flash memory. Storage unit 220 is drawn with dashed lines because it may be alternatively located within processing circuit 230 or external to electronic device 200.

Processing circuit 230 of electronic device 200 may be configured to perform one or more operations, thereby providing various functions of electronic device 200. Processing circuit 230 may perform corresponding operations by executing one or more executable instructions stored in storage unit 220. Processing circuit 230 may be used to implement one or more steps performed by a UE in various methods according to some embodiments of the present disclosure.

According to some embodiments of the present disclosure, processing circuit 230 may be configured to perform the method for machine learning described herein. Specifically, processing circuit 230 may be configured to obtain a first artificial intelligence model that is trained by electronic device 200, and receive a second artificial intelligence model that is trained by another electronic device different from electronic device 200. Processing circuit 230 may be further configured to determine a model difference between the second artificial intelligence model and the first artificial intelligence model. Then, processing circuit 230 may be configured to send the determined model difference to a federated learning server.

According to some embodiments of the present disclosure, processing circuit 230 may include a model training unit 231 and a model comparison unit 232. Model training unit 231 may be configured to train the first artificial intelligence model. Model training unit 231 is drawn with dashed lines because it may be alternatively located external to processing circuit 230 or electronic device 200. In other words, in some embodiments, model training may not necessarily be a built-in function of processing circuit 230, but may be implemented by other parts of electronic device 200 instead. For example, model training may be performed by a peripheral device (such as a PC, a neural network computing stick), etc. that is associated with electronic device 200. Model comparison unit 232 may receive the first artificial intelligence model trained by the peripheral device. Processing circuit 230 may receive the second artificial intelligence model through communication unit 210. Model comparison unit 232 may be configured to determine the model difference between the received second artificial intelligence model and the first artificial intelligence model. Processing circuit 230 may send the determined model difference to the federated learning server through communication unit 210. Details about the method performed by processing circuit 230 will be further described below.

It should be understood that processing circuit 230 in FIG. 2 is merely exemplary. Processing circuit 230 may include one or more additional units for performing the technology of the present disclosure.

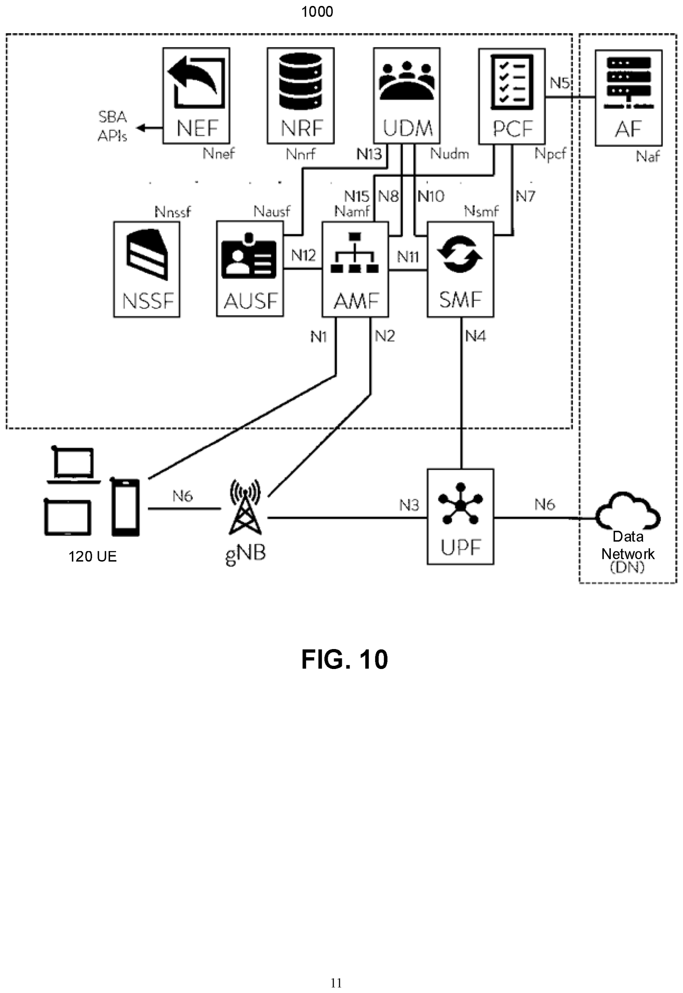

FIG. 3 illustrates an exemplary block diagram of an electronic device 300 according to some embodiments of the present disclosure. Electronic device 300 may be implemented on network side or server side of a system. Therefore, electronic device 300 may be referred to as a network-side device, a control-side device, or a server-side device. In the present disclosure, the network-side device, the control-side device, or the server-side device may collectively refer to one or more devices that are distinguished from the user-side device (e.g., UE). Depending on functions and operations performed, the one or more devices may include a wireless access point, a base station, a core network node, or a federated learning server. For example, in the context of performing actions (e.g., resource allocation) on a radio access network (RAN) side, the one or more devices may include a base station. For another example, in the context of model training, aggregation, and distribution, the one or more devices may include the federated learning server. When discussing an overall solution including model training and resource allocation, the one or more devices may include both of the base station and the federated learning server, which serve as an entirety opposed to the user-side device. In this case, the one or more devices may further include one or more intermediate devices (e.g., a core network node) between the base station and the federated learning server. The federated learning server may be communicatively coupled to the base station. For example, the federated learning server may reside on the AF and communicate with the base station through one or more interfaces (such as the Naf interface in FIG. 10). The user-side device may be communicatively coupled to the base station and communicatively coupled to the federated learning server via the base station. In the present disclosure, a link from the user-side device to the base station or the federated learning server is referred to as an uplink, while a link from the base station or the federated learning server to the user-side device is referred to as a downlink.

In some embodiments, electronic device 300 may be used to implement a server (e.g., server 110 in FIG. 1A) in a distributed training system or to host the server. In some embodiments, electronic device 300 may be connected to the server and, on behalf of the server, interface with the UEs (e.g., UEs 120 in FIG. 1A) for performing training. In some embodiments, electronic device 300 may be implemented as a base station (BS). For example, electronic device 300 may be implemented as the BS itself, as part of the BS, or as a control device for controlling the BS. Electronic device 300 may be implemented as a chip for controlling the BS. In some embodiments, electronic device 300 may be implemented as an access point (AP) in a Wi-Fi system. In some embodiments of the present disclosure, electronic device 300 is implemented as the BS itself, which is merely for the convenience of description and is not intended to be limiting. In other embodiments, electronic device 300 may be implemented as another network-side device, control-side device, or server-side device that is associated with the BS.

According to some embodiments of the present disclosure, electronic device 300 may include a communication unit 310, a storage unit 320, and a processing circuit 330.

Communication unit 310 of electronic device 300 may be used to receive or send wired transmission or radio transmission. Communication unit 310 may be used to establish and maintain one or more communication links. Each communication link may carry associated transmission. For example, the one or more communication links may be a communication link between electronic device 300 and a UE (e.g., electronic device 200), including an uplink and/or a downlink. Communication unit 310 may perform functions such as up-conversion, digital-to-analog conversion on the sent signal, and/or perform functions such as down-conversion, analog-to-digital conversion on the received signal. Communication unit 310 may be implemented using various technologies. For example, communication unit 310 may be implemented as a communication interface component such as an antenna device, a radio frequency circuit, and a partial baseband processing circuit. In FIG. 1, communication unit 310 is drawn with dashed lines because it may be alternatively located within processing circuit 330 or external to electronic device 300.

Storage unit 320 of electronic device 300 may store information generated by processing circuit 330, information received from other devices through communication unit 310 or information to be sent to other devices, programs, machine codes and data used for operations of electronic device 300, etc. According to some embodiments of the present disclosure, storage unit 320 may store local models uploaded by UEs, model differences, aggregated global models, resource configuration data and/or other associated data. Storage unit 320 may be a volatile memory and/or a non-volatile memory. For example, storage unit 320 may include, but is not limited to, a random access memory (RAM), a dynamic random access memory (DRAM), a static random access memory (SRAM), a read-only memory (ROM), and a flash memory. Storage unit 320 is drawn with dashed lines because it may be alternatively located within processing circuit 330 or external to electronic device 300.

Processing circuit 330 of electronic device 300 may be configured to perform one or more operations, thereby providing various functions of electronic device 300. For example, processing circuit 330 may perform corresponding operations by executing one or more executable instructions stored in storage unit 320. Processing circuit 330 may be used to implement one or more steps performed by a network-side device or a server-side device in various methods according to some embodiments of the present disclosure.

According to some embodiments of the present disclosure, processing circuit 330 may perform the method for machine learning described herein. Specifically, processing circuit 330 may be configured to receive a first artificial intelligence model from a first UE. The first artificial intelligence model is trained by the first UE in a federated learning process. Processing circuit 330 may be configured to receive a model difference from a second UE. The model difference represents a difference between the first artificial intelligence model and a second artificial intelligence model trained by the second UE in the federated learning process. Processing circuit 330 may further be configured to generate a global artificial intelligence model based on aggregating at least the first artificial intelligence model and the model difference.

According to some embodiments of the present disclosure, processing circuit 330 may include a model aggregation unit 331. Processing circuit 330 may receive the first artificial intelligence model from the first UE and the model difference from the second UE through communication unit 310. The model aggregation unit 331 may aggregate the received first artificial intelligence model and the received model difference to generate the global artificial intelligence model. Details about the method performed by processing circuit 330 will be further described below.

It should be understood that processing circuit 330 in FIG. 3 is merely exemplary. Processing circuit 330 may include one or more additional units for executing the method of the present disclosure.

It should be noted that the various units described above are exemplary and/or preferred modules for implementing the processing described in the present disclosure. These modules may be hardware units (such as central processing units, field programmable gate arrays, digital signal processors or application specific integrated circuits, etc.) and/or software modules (such as computer-readable programs). The modules for implementing the various steps described below are not described in detail above. However, as long as there is a step for performing a certain processing, there may be a corresponding module or unit (implemented by hardware and/or software) for implementing the same processing. The technical solutions defined by all combinations of the steps described below and the units corresponding to these steps are included in the disclosure of the present disclosure, as long as the technical solutions they constitute are complete and applicable.

Furthermore, a device composed of various units may be incorporated into a hardware device (such as a computer) as a functional module. In addition to those functional modules, the electronic device may of course have other hardware or software components.

### 3. Exemplary Methods

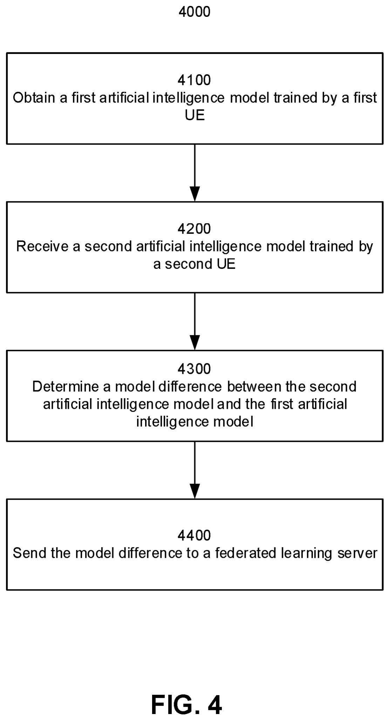

FIG. 4 illustrates a flowchart of a method 4000 for machine learning according to some embodiments of the present disclosure. Method 4000 may be performed on UE side. For example, method 4000 may be performed by a first UE. The first UE may be one of a plurality of UEs (e.g., UEs 120 in FIG. 1A) in a distributed system for machine learning. The first UE may be implemented by the aforementioned electronic device 200. Accordingly, method 4000 may be performed by processing circuit 230 of electronic device 200.

Method 4000 may start with step 4100. In step 4100, the first UE may be configured to obtain a first artificial intelligence model that is trained by the first UE. The first artificial intelligence model may be a local model that is trained by the first UE using local data of the UE in the federated learning process. For example, the first artificial intelligence model may be local model 121 in FIG. 1A. More specifically, in the case of the first UE being UE 120-1, the first artificial intelligence model may be local model 121-1.

The technology of the present disclosure may be applied to various types of artificial intelligence models, including models that have been developed and models that may be developed in the future. Exemplary artificial intelligence models include, but are not limited to, models trained by convolutional neural networks (CNNs), deep neural networks (DNNs), recursive neural networks (RNNs), long short-term memory (LSTMs), generative models, random forests, and their variations and enhancements. Each artificial intelligence model may be represented by a set of model parameters that characterize the model. For example, for a CNN model, the set of model parameters that characterizes the model may include, but are not limited to, one or more parameters that describe a number of layers of the neural network, a number of neurons in each layer and their distribution, the connections among the neurons, weights of each neuron connection, etc. For other types of models, other types of model parameter sets may be used to characterize. In the present disclosure, each UE may use various appropriate technologies to train its respective local model, including training technologies that have been developed and training technologies that may be developed in the future. In the training process, the UE may use local data as training data to tune one or more parameters in the set of model parameters that characterize the local model. Therefore, the trained local model may be represented by a set of tuned model parameters.

Method 4000 may proceed to step 4200. In step 4200, the first UE may be configured to receive a second artificial intelligence model that is trained by a second UE. The second UE may be another UE that is different from the first UE and that participates in the federated learning. The second artificial intelligence model may be a local model that is trained by the second UE using local data of the UE in the process of the federated learning. Receiving the second artificial intelligence model may include receiving a set of model parameters characterizing the model. In some embodiments, the first UE may receive the second artificial intelligence model via a sidelink between the first UE and the second UE. In some embodiments, the second UE may be a UE, among the plurality of UEs participating in the federated learning, that completed the current training round earlier than the first UE. Preferably, the second UE may be a UE that has earliest completed the current training round among the plurality of UEs. This makes it possible for the first UE to complete comparison between model parameters, determination of the model difference, and reporting of the model difference within a time limit of the current training round.

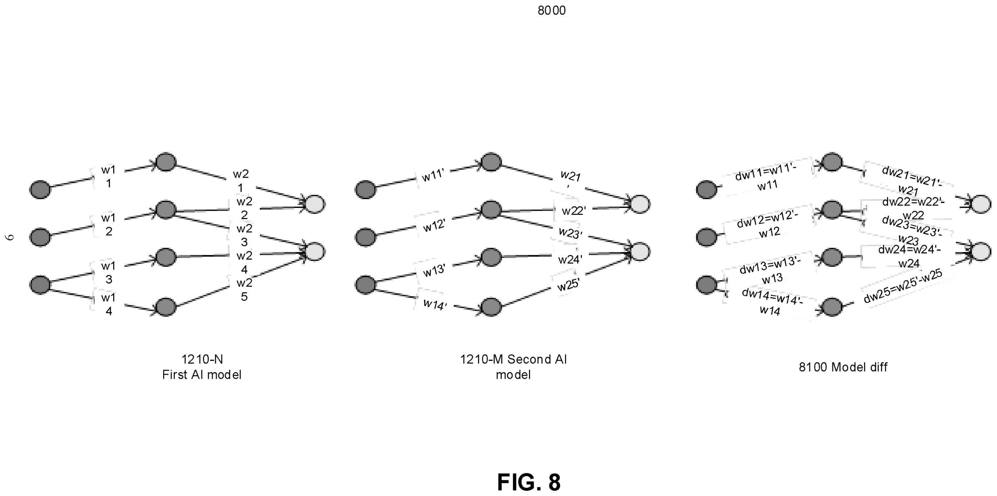

Method 4000 may proceed to step 4300. In step 4300, the first UE may be configured to determine a model difference between the second artificial intelligence model and the first artificial intelligence model. The model difference may represent a difference between the two models. According to some embodiments of the present disclosure, the first UE may determine the model difference between the two models based on a first set of model parameters representing the first artificial intelligence model and a second set of model parameters representing the second artificial intelligence model. As an example rather than limitation, FIG. 8 illustrates a schematic diagram of determining the model difference according to some embodiments of the present disclosure.

According to some embodiments of the present disclosure, various metrics may be used to characterize the model difference. Exemplary metrics may include one or more of gradients, weights, divergences, distances, eigenvalues, and the like. In some embodiments, the value of each metric characterizing the model difference may be a difference between values of two respective parameters of the first artificial intelligence model and the second artificial intelligence model. For example, in the case of the respective parameter being the gradient of the weight of the model, the value characterizing the model difference between the two models may include a difference in the gradients associated with the two models. In some embodiments, the value of the each metric may be a distance metric or a similarity metric (such as Euclidean distance, KL divergence, normalized value, etc.) between the two parameters. In some embodiments, features of the model difference may be used to represent the model difference to further reduce the amount of data. These features of model difference may be represented by compression or enhancement of the model difference, including but not limited to distribution, eigenvalues, pruning of model difference, top-k weights of the model difference, weights of model difference above a certain threshold, certain layers of the model difference, and the like.

Method 4000 may proceed to step 4400. In step 4400, the first UE may be configured to send the model difference determined in step 4300 to a federated learning server. The federated learning server may be, for example, server 110 in FIG. 1A. The federated learning server may obtain a corresponding global model based on aggregating the model difference received from the first UE and the second intelligent model received from the second UE.

In method 4000, the first UE sends the model difference, instead of the local model trained by that UE (e.g., the first artificial intelligence model). In this way, it is possible to reduce the amount of data uploaded by the first UE, thereby reducing the load of the uplink of the first UE.

According to some embodiments of the present disclosure, method 4000 may include one or more optional or preferred steps.

In some optional embodiments, the execution of method 4000 may be triggered in response to a specific link quality condition. For example, method 4000 may be executed when the uplinks of one or more UEs participating in the federated learning are limited. Specifically, when the quality of the uplink of the first UE is lower than a predetermined link quality condition, method 4000 may be triggered for execution, so that the first UE may send the model difference to the federated learning server. This may achieve our goal of reducing the load of the uplink of the first UE. When the quality of the uplink of the first UE is not lower than the predetermined link quality condition, the first UE may directly transmit the first artificial intelligence model itself, without calculating and transmitting the model difference. The predetermined link quality condition may be any suitable condition that is predetermined, including but not limited to a predetermined link bandwidth or a predetermined number of available resources, etc. As an example rather than limitation, the predetermined link quality condition may be configured by a server-side device (e.g., the federated learning server) to the individual UEs. For example, in a cellular communication system, the federated learning server may issue the configured predetermined link quality condition to each UE through signaling of the base station. For another example, in a Wi-Fi system, the federated learning server may issue the configured predetermined link quality condition to each UE through an AP. In some embodiments, each UE may monitor the quality of its own uplink. In some embodiments, the network-side device (e.g., the base station or the AP) may monitor the uplink quality of each UE. When the uplink quality of one or more UEs is lower than the predetermined link quality condition, the network-side device may trigger execution of method 4000.

In some optional embodiments, the execution of method 4000 may be triggered based on an expected model transmission time of the first UE. If the expected model transmission time is too long (e.g., exceeding a certain threshold), the first UE may be configured to transmit the model difference to reduce model transmission time. If the expected model transmission time is not too long (e.g., not exceeding the certain threshold), the first UE may be configured to transmit the first artificial intelligence model itself. The expected model transmission time may be evaluated based on the amount of data to be transmitted and transmission rate of the uplink. As an example rather than limitation, a sum of the model training time and the expected model transmission time may be compared against a latency tolerance threshold associated with the model training. If the sum exceeds the latency tolerance threshold, the first UE may be configured to transmit the model difference. Otherwise, the first UE may be configured to transmit the first artificial intelligence model itself. The latency tolerance threshold may be set by the federated learning server. The latency tolerance threshold may be associated with each training round.

In some optional embodiments, the first UE may send the model difference only when the model difference is small enough. The model distance may be a numerical metric of the model difference. The greater the difference between the two models, the greater the value of the model distance between the two models. When the model distance corresponding to the model difference is less than a predetermined model distance threshold, the amount of data required to send the model difference may be small enough. Therefore, the first UE may send the model difference to the federated learning server when the model distance corresponding to the model difference is less than the predetermined model distance threshold. When the model distance corresponding to the model difference is not less than the predetermined model distance threshold, the benefit of uploading the model difference may be insignificant. In this case, the first UE may optionally look to a third UE that is different from the second UE to evaluate the model difference between the first UE and the third UE. The predetermined model distance threshold may be any predetermined value that is appropriate. As an example rather than limitation, the predetermined model distance threshold may be configured by the server-side device (e.g., the federated learning server) to individual UEs. For example, the federated learning server may issue the configured predetermined model distance threshold to each UE through the base station or the AP. In some embodiments, the base station may include the predetermined model distance threshold in various types of signaling that is sent to the UE, including but not limited to RRC signaling, MAC CE signaling, DCI signaling, and the like.

The model distance may be calculated based on the model difference in various ways. In some embodiments, the model difference is represented as a set of differences between one or more parameters corresponding to the first artificial intelligence model and the second artificial intelligence model. Therefore, the model distance may be a weighted average of the differences between the one or more parameters. Alternatively or additionally, the model distance may be a weighted average of distance metrics or similarity metrics (such as Euclidean distances, KL divergences, normalized values, etc.) between the one or more parameters. In other embodiments, any other methods may be alternatively used to calculate the model distance.

In some embodiments, method 4000 may be performed when the first UE and the second UE belong to a same particular group of the federated learning. One or more grouping criteria as described above may be adopted, such as a grouping criterion based on the locations of the UEs, a grouping criterion based on the trust relationship among the UEs, or a grouping criterion based on the model distance. Preferably, UEs participating in the federated learning may be grouped so that multiple UEs have a short model distance therebetween are divided into the same group. Therefore, if the first UE and the second UE are divided into the same group, the model distance between the first artificial intelligence model and the second artificial intelligence model will be small enough. In this case, method 4000 may be performed, wherein the first UE may perform a model exchange with the second UE and send the model difference to the federated learning server.

According to an embodiment of the present disclosure, various suitable methods may be adopted to group the individual UEs participating in the federated learning. In some embodiments, a centralized grouping method may be adopted, wherein the grouping is determined by the federated learning server based on the model distance. In other embodiments, an autonomous grouping method may be adopted, wherein the grouping is determined by the UEs (e.g., the first UE or the second UE) based on the model distance, rather than by the federated learning server.

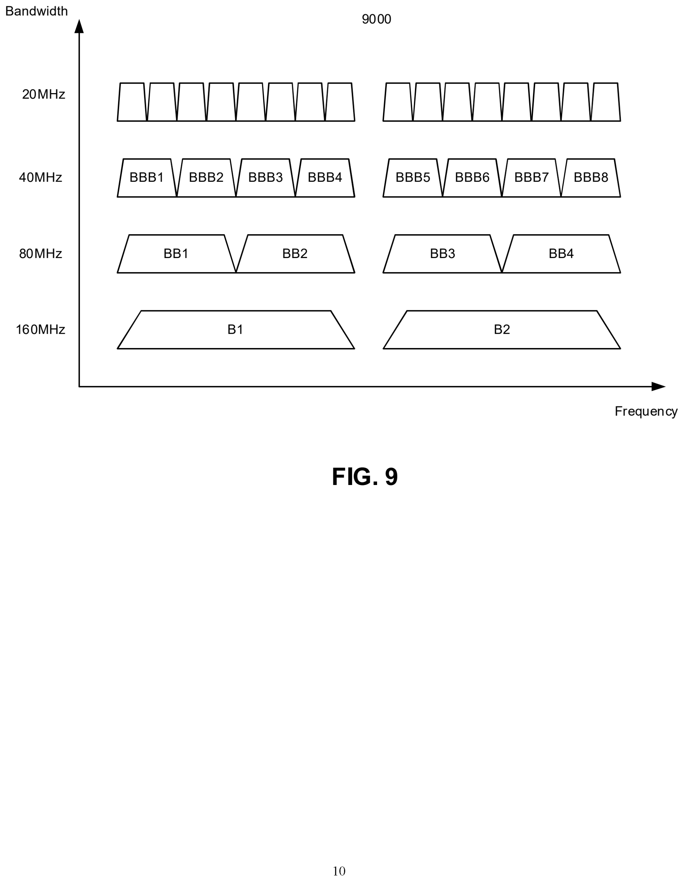

In some embodiments, when the first UE and the second UE belong to the same group, specific communication resources may be allocated to the first UE and/or the second UE based on the group. These communication resources may be group specific. The group-specific resources may not be used by a UE that does not belong to the group. The group-specific resources may improve communication efficiency of UEs within each group and/or reduce communication interference across different groups. In some embodiments, a particular group including the first UE and the second UE may be allocated resources that are specific to that group, so that the first UE may be configured to communicate with the second UE using the resources. For example, the particular group including the first UE and the second UE may be allocated with resources in a first frequency band, while another group different from the particular group may be allocated with resources in a second frequency band that is different from the first frequency band. As an example rather than limitation, FIG. 9 illustrates a schematic diagram of resource allocation according to some embodiments of the present disclosure.

In some embodiments, the group-specific resources may include a sidelink resource that is allocated for a sidelink between the UEs in the group. For example, in response to the first UE and the second UE belonging to the same group, the first UE and the second UE may receive resource configuration information from the network-side device, and the resource configuration information may indicate a sidelink resource that is specific to the group for use in the sidelink communication between the first UE and the second UE. In some embodiments, such sidelink resources may form a resource pool that is specific to the group. In other words, a resource pool of sidelink resources may be allocated based on training tasks of the federated learning, so that a same sidelink resource pool is allocated to multiple UEs that share a same or similar training task (these UEs are located in the same group of the federated learning). In some embodiments, the sidelink resource pool may be allocated in mode II associated with sidelink resources.

In some embodiments, the individual UEs participating in the federated learning may autonomously form group-specific resources. Specifically, in response to a determination that the first UE and the second UE belong to the same group, the first UE may maintain the initial communication channel with the second UE. In response to a determination that the first UE and the third UE do not belong to the same group, the first UE or the third UE may deactivate the initial communication channel between the UEs. In subsequent communications, the first UE and the second UE may continue to use a communication resource (e.g., a frequency band) that is associated with the initial communication channel between the UEs. The third UE may deactivate a communication resource that is associated with the initial communication channel between the first UE and the third UE, and instead use another communication resource (e.g., an orthogonal communication resource) that is different from the communication resource. This resource adjustment process may be iterated with the iteration of the training rounds. In this way, group-specific resources (where each UE uses resources associated with the group to which the UE belongs) may be autonomously formed, thereby reducing explicit configuration of resources performed by the network-side device.

In some embodiments, method 4000 may additionally include filtering the model difference before sending the model difference to the federated learning server, to further reduce the amount of data required to transmit the model difference. For example, one or more values in the model difference may be filtered. As described above, one or more values in the model difference may characterize the difference or distance between respective parameters of the first artificial intelligence model and the second artificial intelligence model. Each of the one or more values representing the model difference may be compared against a respective predetermined transmission threshold. The predetermined transmission threshold may be a non-zero value. If a particular value of the one or more values is greater than a respective predetermined transmission threshold, the particular value may be included in the model difference for transmission. If the particular value is not greater than the respective predetermined transmission threshold, the particular value may not be included in the model difference. This is because minor aspects of the model difference may be ignored without significantly affecting the performance of model aggregation. Optionally, a few bits (e.g., several 1-bit flags) may be set in the model difference to indicate that certain values have been omitted. In this way, the number of values contained in the model difference and the data space they occupy may be reduced, thereby compressing the size of the model difference.

In some optional embodiments, method 4000 may further include receiving, by the first UE, a global artificial intelligence model from the federated learning server. The global artificial intelligence model may be generated by the federated learning server through aggregating at least the model difference received from the first UE and the second artificial intelligence model received from the second UE.

In some optional embodiments, method 4000 may further include updating the first artificial intelligence model, which is local to the first UE, based on the received global artificial intelligence model. Additionally, the updated first artificial intelligence model may be used by the first UE for a next training round of the federated learning. Similarly, the second UE may be configured to update its local second artificial intelligence model based on the received global artificial intelligence model. The updated second artificial intelligence model may be used by the second UE for the next training round of the federated learning.

It should be understood that the above description is merely an exemplary embodiment of method 4000. Details of various embodiments of method 4000 as well as additional or optional embodiments will be further described below.

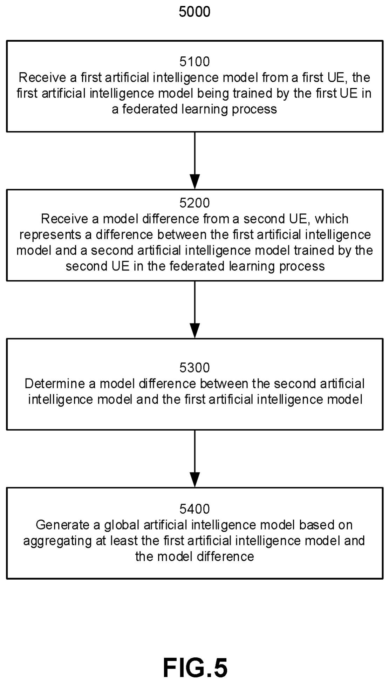

FIG. 5 illustrates a flowchart of a method 5000 for machine learning according to some embodiments of the present disclosure. Method 5000 may be performed on network side or server side. For example, method 5000 may be performed by a server 110 for federated learning, or by a network-side device (e.g., a base station) associated with server 110, or by both of them in cooperation. The device for performing method 5000 may be implemented by the aforementioned electronic device 300. Accordingly, method 5000 may be performed by processing circuit 330 of electronic device 300.

Method 5000 may start with step 5100. In step 5100, the network-side device may be configured to receive a first artificial intelligence model from a first UE. The first artificial intelligence model may be a local model that is trained by the first UE in a federated learning process. Receiving the first artificial intelligence model may include receiving a set of model parameters characterizing the first artificial intelligence model.

Method 5000 may proceed to step 5200. In step 5200, the network-side device may be configured to receive a model difference from a second UE. The model difference may represent a difference between the first artificial intelligence model trained by the first UE and a second artificial intelligence model trained by the second UE during the federated learning process. As described above, the model difference may be characterized using various appropriate metrics.

Optionally, the model difference is received from the second UE when one or more conditions are met. In some embodiments, the model difference is received when the uplink quality of the second UE is less than a predetermined link quality condition. In some embodiments, the model difference is received when the model distance corresponding to the model difference is less than a predetermined model distance threshold. In some embodiments, the model difference is received when the first UE and the second UE belong to the same specific group.

Method 5000 may proceed to step 5300. In step 5300, the network-side device may generate a global artificial intelligence model based on aggregating at least the first artificial intelligence model received from the first UE and the model difference received from the second UE.

In some embodiments, the network-side device may restore the second artificial intelligence model based on the first artificial intelligence model and the model difference between the first artificial intelligence model and the second artificial intelligence model. Then, the network-side device may aggregate the first artificial intelligence model and the restored second artificial intelligence model to obtain the global artificial intelligence model. In other embodiments, the network-side device may directly aggregate the first artificial intelligence model and the model difference. In addition to the first artificial intelligence model and the associated model difference from the first UE and the second UE, the network-side device may additionally aggregate one or more additional artificial intelligence models and associated additional model differences from other UEs participating in the federated learning. Various suitable aggregation technologies may be adopted. For example, sets of model parameters of multiple models (or model differences) may be combined, pruned, weighted summed, and the like so as to obtain a set of model parameters that may characterize the global artificial intelligence model.

In some embodiments, a particular value in the model difference is received when the particular value is greater than a predetermined transmission threshold. For certain parameters whose values are less than the predetermined transmission threshold, the model difference may not include respective values for those parameters. In this case, the network-side device may be configured to not consider values of those parameters in the model difference when restoring model or aggregating model, or may be configured to use default values (e.g., zero) as values of those parameters in the model difference. In some embodiments, the network-side device may identify whether the model difference contains a value of a parameter (which corresponds to a flag bit in the received model difference) by identifying the flag bit.

Additionally, method 5000 may include one or more optional or preferred steps. In some embodiments, method 5000 may include sending the obtained global artificial intelligence model to the first UE and the second UE. In some embodiments, sending the global artificial intelligence model includes sending a set of model parameters characterizing the model. In some embodiments, sending the global artificial intelligence model includes sending an increment of the model relative to the global artificial intelligence model that was obtained in the previous training round. For example, the increment may be characterized by gradients of model parameters of the global artificial intelligence model. The first UE or the second UE may update the first artificial intelligence model or the second artificial intelligence model local to the UEs based on the received global artificial intelligence model. The updated first artificial intelligence model and the second artificial intelligence model may be used by the respective UEs for the next training round of the federated learning.

In some optional embodiments, method 5000 may include grouping of the UEs that participate in the federated learning. The grouping may be determined based on the one or more grouping criteria as described above. Preferably, the grouping may be determined based on model distances between the UEs participating in federated learning. In some embodiments, the grouping may be determined by the network-side device based on the model distances. In other embodiments, the grouping may be determined autonomously by individual UEs (e.g., the first UE or the second UE) based on the model distances. The network-side device may aggregate the first artificial intelligence model from the first UE and the model difference from the second UE when the first UE and the second UE belong to the same specific group.

In some optional embodiments, the network-side device may be configured to allocate, to each group, resources that are specific to that group. In some embodiments, those resources include a group-specific sidelink resource for communication between different UEs in the group. For example, those sidelink resources may include a group-specific resource pool. The resource pool may be allocated based on training tasks of the federated learning process, so different groups with different training tasks may be associated with different resource pools.

It should be understood that the above description is merely an exemplary embodiment of method 5000. Details of various embodiments of method 5000 as well as additional or optional embodiments will be further described below.

### 4. Exemplary Processes

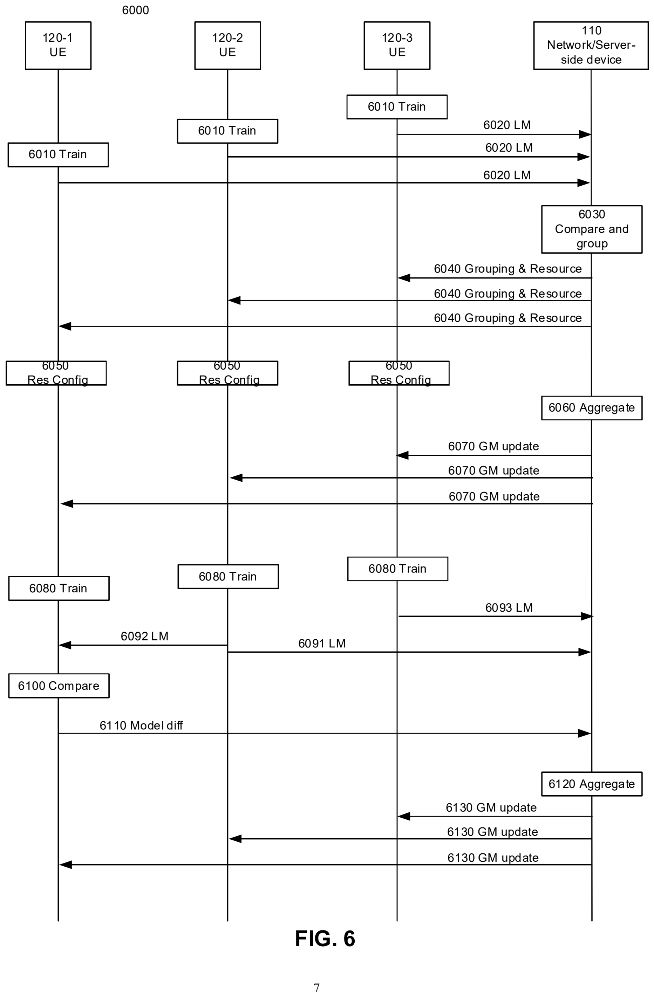

FIG. 6 illustrates a communication process 6000 for machine learning according to some embodiments of the present disclosure. Communication process 6000 adopts a centralized grouping method. In the centralized grouping method, the grouping of the individual UEs participating in the federated learning is determined by a network-side device or a server-side device. For simplicity, FIG. 6 illustrates three UEs 120-1, 120-2, and 120-3 that participates in the federated learning. It may be understood that in other embodiments, there may be more UEs acting as training devices without limitation.

In step 6010, each of UEs 120-1, 120-2, and 120-3 may be configured to perform model training using respective local data. Through the model training, each UE may obtain a respective local model, such as local models 121-1, 121-2, and 121-3 (not shown). Local models 121-1, 121-2, and 121-3 may be obtained by UE 120-1, 120-2, and 120-3 in a same training round of the federated learning.

In step 6020, each of UE 120-1, 120-2, and 120-3 may be configured to send the trained local models (LMs) 121-1, 121-2, and 121-3 to the network-side device (or the server-side device) 110, respectively. Specifically, each of UEs 120-1, 120-2, and 120-3 may be configured to send a set of model parameters representing the trained local models 121-1, 121-2, and 121-3 to network-side device 110.

In step 6030, network-side device 110 may be configured to compare the received local models 121-1, 121-2, and 121-3, and group UEs 120-1, 120-2, and 120-3 based on the comparison. Specifically, network-side device 110 may be configured to determine the model differences among local models 121-1, 121-2, and 121-3. Network-side device 110 may compare the model distances corresponding to the model differences against a predetermined model distance threshold. When a model distance corresponding to a model difference between two local models is less than the predetermined model distance threshold, network-side device 110 may determine that the two UEs associated with those two local models belong to a same group. When a model distance corresponding to a model difference between two local models is not less than the predetermined model distance threshold, network-side device 110 may determine that the two UEs associated with those two local models belong to different groups. In the embodiment illustrated in FIG. 6, UE 120-1 and UE 120-2 may be divided into a first group, while UE 120-3 may be divided into a second group different from the first group. It should be understood that such grouping result is merely an example instead of a limitation.

In some embodiments, the predetermined model distance threshold may be dynamically changed. For example, the predetermined model distance threshold may change with the training rounds of the federated learning. The predetermined model distance threshold may be dynamically set by the federated learning server. If network-side device 110 that performs the grouping is the federated learning server, the predetermined model distance threshold may be directly applied. If network-side device 110 that performs the grouping is another device (e.g., a base station or a core network node) than the federated learning server, the federated learning server may communicate the predetermined model distance threshold to the other device for use in grouping.

In step 6040, network-side device 110 may be configured to send group information to UEs 120-1, 120-2, and 120-3. The group information sent to each UE may indicate a respective group to which the UE belongs. Additionally, network-side device 110 may be configured to send resource configuration information to UE 120-1, 120-2, and 120-3. The resource configuration information may be based on the determined group(s). Preferably, the resource configuration information may indicate, to each group, resources that are specific to the group.

In step 6050, each of UEs 120-1, 120-2, and 120-3 may perform resource configuration based on the received group information and/or the resource configuration information. For example, each UE may identify specific resources that are allocated to the group to which the UE belongs, and may use those specific resources for communication. Specifically, UE 120-1 and UE 120-2 may communicate by using a first set of resources that are specific to the first group, while UE 120-3 may communicate by using a second set of resources that are specific to the second group. The first set of resources and the second set of resources may be different, for example, being associated with different frequency bands and/or different time slots. In some embodiments, the first set of resources and the second set of resources are sets of sidelink resources. Sidelink resources may be used for sidelink communications between the UEs, including transmitting local models and/or model differences between the UEs.

In step 6060, network-side device 110 may perform model aggregation to generate a global model. The model aggregation in this step may be based on local models 121-1, 121-2, and 121-3 from the individual UEs. Network-side device 110 may send the obtained global model to each of UEs 120-1, 120-2, and 120-3 in step 6070. It should be understood that, in an alternative embodiment, steps 6060-6070 may alternatively be performed before steps 6040-6050, or be performed in parallel with steps 6040-6050.

In step 6080, each of UEs 120-1, 120-2, and 120-3 may be configured to perform model training for the next training round. Each UE may be configured to update the local model of the UE based on the global model (GM) received in step 6070. Each UE may be configured to perform the next round of model training on the updated local model. Accordingly, each of UEs 120-1, 120-2, and 120-3 may obtain a further trained local model 121-1, 121-2, and 121-3, respectively.

After the grouping, not every UE 120-1, 120-2, and 120-3 sends the trained local model to network-side device 110. A particular UE in each group is configured to send the local model trained by that UE to network-side device 110, while the remaining UEs in that group are configured to send model differences between those UEs and the particular UE. The UE that is configured to send the local model to network-side device 110 in each group may be referred to as a primary UE in the group, and the other UEs may be referred to as auxiliary UEs of the group.

Various suitable criteria may be adopted to select, from one or more UEs of each group, the primary UE for that group. In some embodiments, among multiple UEs of each group, the UE that has earliest completed the current training round may be selected as the primary UE for the group in the training round. Because the primary UE needs to additionally send the trained local model to other UEs, selecting the UE that has earliest completed the current training round may reduce overall time of the system. In this case, the UE that sends the trained local model to network-side device 110 earliest in each group may be determined as the primary UE for the group. For example, UE 120-2 in the first group may complete the model training of step 6010 faster than UE 120-1. Therefore, UE 120-2 may be determined as the primary UE for the first group. The primary UE for each group may be specified in the group information in step 6040.

In some embodiments, among the multiple UEs in each group, the UE having the best uplink quality may be selected as the primary UE for that group. Because the primary UE needs to send the trained local model to network-side device 110 via its uplink, the requirement for its uplink is relatively high. In some embodiments, network-side device 110 may allocate more uplink resources to the selected primary UE in the resource configuration information that is sent in step 6040.

In the embodiment illustrated in FIG. 6, UE 120-2 may be selected as the primary UE in the first group. UE 120-2 is configured to send local model 121-2, which is trained by that UE, to network-side device 110 in step 6091. In the second group, UE 120-3 may be the primary UE of the group, which is configured to send local model 121-3 trained by the UE to network-side device 110 in step 6093. It should be understood that the illustrated selection of the primary UEs is merely exemplary and is not intended to be limiting.

The remaining UEs 120-1 in the first group may be an auxiliary UE for the group. UE 120-1 may be configured to send a model difference to network-side device 110, instead of local model 121-1. Specifically, UE 120-1 may be configured to receive, from UE 120-2 in step 6092, local model 121-2 trained by UE 120-2 in the same group. In some embodiments, the local model may be transmitted between UEs 120-1 and 120-2 using a sidelink resource specific to the first group. Then, UE 120-1 may be configured to determine, based on a comparison of the received local model 121-2 with local model 121-1 trained by the UE itself, the model difference between the two models in step 6100. UE 120-1 may be configured to send the determined model difference to network-side device 110 in step 6110. It should be understood that step 6091, steps 6092-6110, and step 6093 may be performed in any suitable order. For example, step 6091, steps 6092-6110, and step 6093 may be performed in parallel.

In some embodiments, UE 120-1 may be configured to determine the uplink quality between the UE and network-side device 110, and send the determined model difference based on the uplink quality being lower than a predetermined link quality condition. In some cases, if the uplink quality is too poor (e.g., lower than a second predetermined link quality condition) to even support the transmission of the model difference, UE 120-1 may be configured to use other links to upload the model difference. As an example rather than limitation, UE 120-1 may transmit the determined model difference to another UE by means of a sidelink between the UE and the other UE. The other UE may act as a relay to upload the model difference to network-side device 110. In this case, identification information of UE 120-1 may be transmitted in association with the model difference, so that one or more devices receiving the model difference may identify the source of the model difference based on the identification information. In some embodiments, the other UE acting as a relay may be in the same group as UE 120-1, because the quality of sidelinks among the UEs in the same group may be better. For example, the other UE may be the primary UE in the group, such as UE 120-2.

In some embodiments, UE 120-1 filters the model difference before sending the model difference to network-side device 110. Specifically, UE 120-1 may compare each of one or more values in the model difference with a respective predetermined transmission threshold. If a particular value in the model difference is greater than the respective predetermined transmission threshold, the particular value may be included in the model difference for transmission. If the particular value in the model difference is not greater than the respective predetermined transmission threshold, the particular value may not be included in the model difference. Optionally, UE 120-1 may set a few bits (e.g., several 1-bit flags) in the model difference to indicate that certain values have been omitted. In this way, UE 120-1 may further compress the size of the model difference.

In step 6120, network-side device 110 may perform model aggregation to generate a global model. The model aggregation of this step may be based on local model 121-2 received in step 6091, local model 121-3 received in step 6093, and the model difference received in step 6110. In some embodiments, network-side device 110 may restore local model 121-1 trained by UE 120-1 based on local model 121-2 received in step 6091 and the model difference received in step 6110, and then aggregate local models 121-1, 121-2, and 121-3 to obtain the global model. In some embodiments, network-side device 110 may not need to restore local model 121-1, but may directly aggregate local model 121-2 received in step 6091, local model 121-3 received in step 6093, and the model difference received in step 6110.

In step 6130, network-side device 110 may send, to each of UEs 120-1, 120-2, and 120-3, the global model obtained in step 6120.

Then, communication process 6000 may repeatedly perform steps 6080-6120 until an end condition of the federated learning is met. In some embodiments, the end condition may include reaching a specified number of training rounds. In some embodiments, the end condition may include the obtained global model reaching a predetermined performance condition.

It should be understood that what is described above is merely an exemplary embodiment of process 6000. In some embodiments, one or more steps in process 6000 are optional and not necessarily required. In some embodiments, process 6000 may include one or more optional steps that are not shown. In some embodiments, members of the groups may change. For example, if in step 6092, UE 120-1 does not receive the local model from UE 120-2 within a specified time threshold, the grouping between UE 120-1 and UE 120-2 may be released. In this case, UE 120-1 may send its trained local model 121-1 to network-side device 110 instead of the model difference.

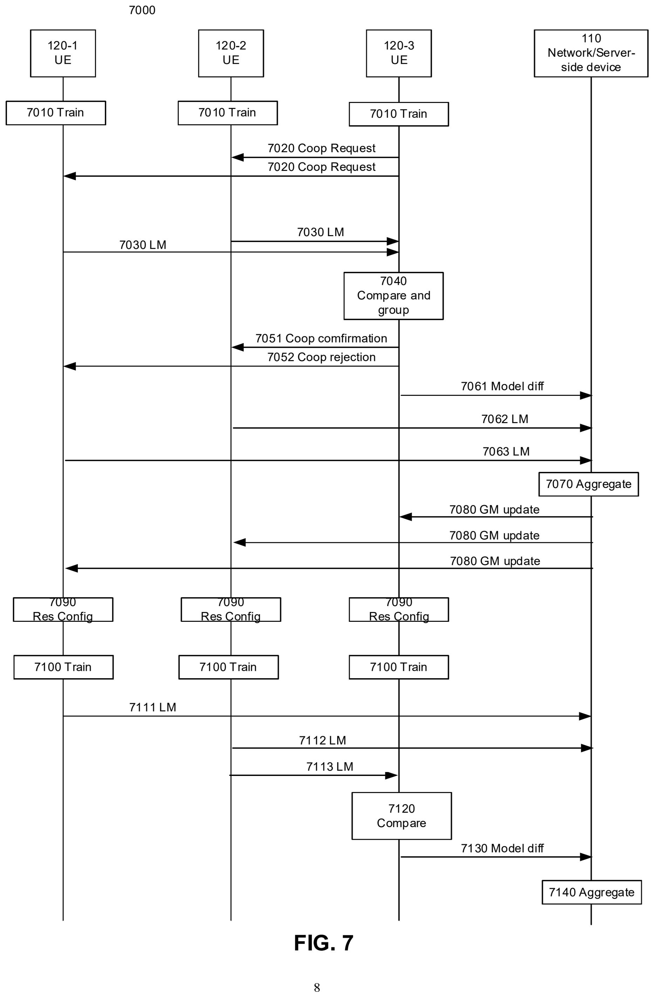

FIG. 7 illustrates another communication process 7000 for machine learning according to some embodiments of the present disclosure. Communication process 7000 adopts an autonomous grouping method. In the autonomous grouping method, the individual UEs participating in the federated learning determine the grouping of those UEs autonomously. For simplicity, FIG. 7 illustrates three UEs 120-1, 120-2, and 120-3 that participate in the federated learning. It may be understood that in other embodiments, there may be more UEs acting as training devices without limitation.

In step 7010, each of the UEs may be configured to perform model training using respective local data. Through the model training, each of the UEs may obtain a respective local model. For example, UEs 120-1, 120-2, and 120-3 may obtain local models 121-1, 121-2, and 121-3 (not shown), respectively. Local models 121-1, 121-2, and 121-3 may be obtained in the same training round of federated learning by UEs 120-1, 120-2, and 120-3.

In step 7020, a cooperation request may be sent by one particular UE of the UEs to one or more other UEs of the UEs. The cooperation request may indicate that the particular UE expects cooperate with suitable UEs in the one or more other UEs to perform the federated learning. The cooperation request may be issued when one or more specific conditions are met. In some embodiments, when the particular UE quickly completes the current training round, the particular UE may issue the cooperation request. In some embodiments, when the uplink quality of the particular UE is lower than a predetermined link quality condition, the particular UE may issue a cooperation request. The destination of the cooperation request may be other UEs that are located near the particular UE (e.g., within a certain distance threshold). For example, a UE may broadcast a message on a physical sidelink discovery channel (PSDCH) to discover other nearby UEs that are participating in the federated learning. Specifically, if the UE is participating in the federated learning, the UE may send a cooperation request on the PSDCH to find other terminals that are participating in the federated learning. After these UEs have discovered each other, a PC5 link may be established between the UEs. The UEs may exchange RRC configuration with each other. In the RRC configuration, the UEs may exchange resource pools that are configured specifically for artificial intelligence models. At least a portion of communication resources in the resource pools may be used by the UEs to exchange model parameters of their local models on a physical sidelink shared channel (PSSCH), as described below. In the example of FIG. 7, UE 120-3 may issue a cooperation request to the other two UEs 120-1 and 120-2.

In response to receiving the cooperation request from UE 120-3, UEs 120-1 and 120-2 may be configured to send their trained local models 121-1 and 121-2 to UE 120-3 respectively in step 7030. Sending of a local model may include sending a set of model parameters characterizing the local model. In some embodiments, the respective local model may be sent via a sidelink between UE 120-3 and UE 120-1 or UE 120-2.

In step 7040, UE 120-3 may be configured to compare the received local models 121-1 and 121-2 respectively with local model 121-3 that is trained by UE 120-3. UE 120-3 may determine, based on the comparison, whether UE 120-3 belong to the same group with UE 120-1 or UE 120-2. Specifically, UE 120-3 may be configured to determine a model difference between local model 121-3 and each of local models 121-1 and 121-2. UE 120-3 may compare a respective model distance corresponding to a respective model difference against a predetermined model distance threshold. When a model distance corresponding to a model difference between two local models is less than the predetermined model distance threshold, UE 120-3 may determine that the two UEs associated with the two local models belong to a same group. When a model distance corresponding to a model difference between two local models is not less than the predetermined model distance threshold, UE 120-3 may determine that the two UEs associated with the two local models belong to different groups. In the embodiment illustrated in FIG. 7, UE 120-3 may determine that UE 120-3 and UE 120-2 may belong to the same group, and thus send a cooperation confirmation message to UE 120-1 in step 7051. UE 120-3 may further determine that UE 120-3 and UE 120-1 do not belong to the same group, and thus send a cooperation rejection message to UE 120-1 in step 7052. It should be understood that such a grouping result is merely an example rather than limitation.

In some embodiments, the predetermined model distance threshold may be dynamically changed. For example, the predetermined model distance threshold may change with the training rounds of federated learning. The predetermined model distance threshold may be dynamically set by the federated learning server. The set predetermined model distance threshold may be communicated from the federated learning server to associated one or more UEs via a base station.

After the grouping, each of the UEs may upload a model difference or a local model based on the grouping result. Specifically, UE 120-3 may be configured to send a model difference. The model difference may be a model difference between local models 121-3 and 121-2 as determined in step 7040. In some implementations, UE 120-3 may upload the model difference via an uplink between the UE and network-side device 110.

In some embodiments, if the quality of the uplink between UE 120-3 and network-side device 110 is too poor (e.g., lower than a second predetermined link quality condition) to even support the transmission of the model difference, UE 120-3 may be configured to use another link to upload the model difference. As an example rather than limitation, UE 120-3 may transmit the a model difference that is determined with respect to another UE by means of a sidelink between the UE and the other UE. The other UE may serve as a relay to upload the model difference to network-side device 110. In this case, identification information of UE 120-3 may be transmitted in association with the model difference, so that one or more devices receiving the model difference may identify the source of the model difference based on the identification information. In some embodiments, the other UE serving as the relay may be in the same group as UE 120-3, because the quality of sidelinks among multiple UEs in the same group may be better. For example, the other UE may be the primary UE for the group, such as UE 120-2.

In some embodiments, before sending the model difference to network-side device 110, UE 120-3 performs filtering on the model difference. Specifically, UE 120-3 may compare each of one or more values in the model difference against a respective predetermined transmission threshold. If a particular value in the model difference is greater than the respective predetermined transmission threshold, the particular value may be included in the model difference for transmission. If the particular value in the model difference is not greater than the respective predetermined transmission threshold, the particular value may not be included in the model difference. Optionally, UE 120-3 may set a few bits (e.g., several 1-bit flags) in the model difference to indicate that certain values have been omitted. In this way, UE 120-3 may further compress the size of the model difference.

In the case of UE 120-3 sending the model difference, UE 120-2, which belongs to the same group as UE 120-3, may be configured to send its trained local model 121-2 in step 7062. UE 120-1, which does not belong to the same group as UE 120-3, may be configured to send its trained local model 121-1 in step 7063. It should be understood that steps 7061-7063 may be performed in any suitable order. For example, steps 7061-7063 may be performed in parallel.

In step 7070, network-side device 110 may perform model aggregation to generate a global model. Network-side device 110 may perform model aggregation to generate the global model. The model aggregation in this step may be based on the model difference received in step 7061, local model 121-2 received in step 7062, and local model 121-1 received in step 7063. In some embodiments, network-side device 110 may restore local model 121-3 that is trained by UE 120-3 based on the model difference received in step 7061 and local model 121-2 received in step 7062, and then aggregate local models 121-1, 121-2, and 121-3 to obtain the global model. In some embodiments, network-side device 110 may not necessarily restore local model 121-1, but may directly aggregate the model difference received in step 7061, local model 121-2 received in step 7062, and local model 121-1 received in step 7063.

In step 7080, network-side device 110 may send the global model obtained in step 7070 to each of UEs 120-1, 120-2, and 120-3.

In step 7090, each of UEs 120-1, 120-2, and 120-3 may perform resource configuration based on the grouping as determined in step 7040, so that each of the groups has resources that are specific to the group. For example, UE 120-3 and UE 120-2 may communicate by using a first set of resources that are specific to the first group, while UE 120-1 may communicate by using a second set of resources that are specific to the second group. The first set of resources and the second set of resources may be different, for example, they may be associated with different frequency bands and/or different time slots. In some embodiments, the first set of resources and the second set of resources are sets of sidelink resources. Sidelink resources may be used for sidelink communications among the UEs, including transmission of local models across the UEs.

In some embodiments, the UE may perform resource configuration in response to a sent/received cooperation confirmation message or a cooperation rejection message. For example, in response to a determination that UEs 120-3 and 120-2 belong to the same group, an initial communication channel between UE 120-2 and UE 120-3 may be maintained. Maintaining the initial communication channel may include fixedly using communication resources associated with the initial communication channel. The initial communication channel is, for example, the channel being used by UE 120-3 to send the cooperation request to UE 120-2 in step 7020, or the channel being used by UE 120-3 to receive a local model from UE 120-2 in step 7030. Specifically, in subsequent communications (e.g., inter-UE communications), UE 120-2 and 120-3 may continue to use those channels for communication. In response to a determination that UE 120-3 and 120-1 do not belong to the same group, UE 120-1 may deactivate the initial communication channel between UE 120-1 and UE 120-3. The initial communication channel is, for example, the channel being used by UE 120-3 to send the cooperation request to UE 120-1 in step 7020, or the channel being used by UE 120-3 to receive a local model from UE 120-1 in step 7030. Specifically, in subsequent communications (e.g., inter-UE communications), UE 120-1 may avoid using this channel for communication. Alternatively, UE 120-1 uses another channel for inter-UE communications. The other channel may be orthogonal to the initial communication channel between UE 120-1 and UE 120-3. For example, the other channel may be located in a different frequency band and/or a different time slot from the initial communication channel. In this way, multiple UEs belonging to the same group may be autonomously associated with the same communication resource, while multiple UEs belonging to different groups may be autonomously associated with different communication resources.

In some embodiments, the UE may perform resource configuration based on resource configuration information from network-side device 110. This may be similar to step 6050 of process 6000. Specifically, UE 120-3 may report the grouping as determined in step 7040 to network-side device 110. Network-side device 110 may determine the resource configuration information for individual groups based on the received group information, and send the determined resource configuration information to the individual UEs.

It should be understood that step 7090 and steps 7061-7080 may be performed in any suitable order. For example, step 7090 and steps 7061-7080 may be performed in parallel.

In step 7100, each of UEs 120-1, 120-2, and 120-3 may be configured to perform model training for the next training round. Each UE may be configured to update the local model of the UE based on the global model received in step 7080. Each UE may be configured to perform the next round of model training on the updated local model. Accordingly, each of UEs 120-1, 120-2, and 120-3 may obtain further trained local models 121-1, 121-2, and 121-3.

Next, not all of UE 120-1, 120-2, and 120-3 send the trained local model to network-side device 110. A particular UE in each group is configured to send the local model trained by that UE to network-side device 110, while the remaining UEs in the group are configured to send model differences between the UEs and the particular UE. The UE configured to send the local model to network-side device 110 in each group may be referred to as a primary UE in the group, and the other UEs may be referred to as auxiliary UEs for the group.

In the embodiment illustrated in FIG. 7, UE 120-2 may be selected as the primary UE in the first group. UE 120-2 is configured to send local model 121-2 trained by the UE to network-side device 110 in step 7112. In the second group, UE 120-1 may be the primary UE for the group, which is configured to send local model 121-1 trained by the UE to network-side device 110 in step 7111. It should be understood that the illustrated selection of primary UEs is merely exemplary and is not intended to be limiting.

The remaining UE 120-3 in the first group may be an auxiliary UE for the group. UE 120-3 may be configured to send a model difference to network-side device 110 instead of its local model 121-3.

Specifically, UE 120-3 may be configured to receive, from UE 120-2 in the same group in step 7113, local model 121-2 that is trained by UE 120-2. In some embodiments, the local model may be transmitted between UE 120-3 and UE 120-2 using the sidelink resources specific to the first group. For example, UE 120-2 may broadcast local model 121-2 using a sidelink resource specific to the first group. Because UEs in different groups communicate on different sets of resources, local model 121-2 broadcast by UE 120-2 can be received by UE 120-3 in the same group but is unlikely to be received by UE 120-1 in a different group. Similarly, UE 120-3 is unlikely to receive local model 121-1 broadcast by UE 120-1. In some embodiments, the transmission of the local model may alternatively be performed in a multicast or a unicast manner.

In step 7120, UE 120-3 may be configured to determine the model difference between received local model 121-2 and local model 121-3 trained by the UE, based on comparison of the two models. UE 120-3 may be configured to send the determined model difference to network-side device 110 in step 7130.

It should be understood that step 7111, step 7112, and steps 7113-7130 may be performed in any suitable order. For example, step 7111, step 7112, and steps 7113-7130 may be performed in parallel.

In step 7140, network-side device 110 may perform model aggregation to generate a global model. Network-side device 110 may perform model aggregation to generate a global model. The model aggregation of this step may be based on the model difference received in step 7130, local model 121-2 received in step 7112, and local model 121-1 received in step 7111.

Network-side device 110 may send the obtained global model to each of UEs 120-1, 120-2, and 120-3 in step 7140. Then, communication process 7000 may repeatedly perform steps 7100-7140 until an end condition of the federated learning is met.

It should be understood that what is described above is merely an exemplary embodiment of process 7000. In some embodiments, one or more steps in process 7000 are optional and not necessarily required. In some embodiments, process 7000 may include one or more optional steps not shown.

In some embodiments, the primary UE for each group may be changed across training rounds of the federated learning. In some embodiments, a UE that has earliest completed the current training round among multiple UEs of each group in a training round may be selected as the primary UE for the group. In some embodiments, the UE that has a best uplink quality among the multiple UEs of each group may be selected as the primary UE for the group.

In some embodiments, members of a group may change. For example, if UE 120-3 fails to receive the local model from UE 120-2 within a specified time threshold in step 7113, the grouping of UE 120-3 and UE 120-2 may be released. In this case, UE 120-3 may send its trained local model 121-3 to network-side device 110, instead of the model difference.

In some alternative embodiments, there may be another grouping process that is different from communication process 7000. For example, instead of sending the cooperation request in step 7020, UE 120-3 sends local model 121-3 trained by the UE to UE 120-1 and UE 120-2. In this case, UE 120-1 and UE 120-2 may each determine whether they belong to the same group with UE 120-3, based on model comparison. For example, UE 120-1 may compare local model 121-1 trained by the UE with local model 121-3 received from UE 120-3. In response to the model distance between local model 121-1 and local model 121-3 being not less than a predetermined distance threshold, UE 120-1 may send a cooperation rejection message to UE 120-3. Similarly, UE 120-2 may compare local model 121-2 trained by the UE with local model 121-3 received from UE 120-3. In response to the model distance between local model 121-2 and local model 121-3 being less than the predetermined distance threshold, UE 120-2 may send a cooperation confirmation message to UE 120-3.

FIG. 8 illustrates a schematic diagram 8000 of determining a model difference according to some embodiments of the present disclosure. In FIG. 8, a first artificial intelligence model 8100 is represented as a plurality of nodes, which are organized into a plurality of layers, and there are one or more edges between the nodes, each edge being associated with a respective weight coefficient ***w*.** For example, the weight coefficient ***w*** may represent the weight of the edge in the first artificial intelligence model 1210-N. A second artificial intelligence model 1210-M may also be represented similarly, but with a different weight coefficient ***w*'.** The difference ***dw*** between the weight coefficients ***w*'** and ***w*** (i.e., ***dw** = **w**' - **w***) may be used to characterize model difference 8100 between the first artificial intelligence model 1210-N and the second artificial intelligence model 1210-M.

In some embodiments, the UE may send model difference 8100 to a federated learning server by sending a determined set of ***dw.*** In other embodiments, model difference 8100 may be sent to the federated learning server by sending a representation of the set of ***dw.*** The representation of ***dw*** may include (1) a distribution or an interleaving sequence of ***dw**;* or (2) an eigenvalue of a matrix composed of ***dw.*** This may further reduce the amount of data to be transmitted. As an example rather than limitation, the distribution of ***dw*** may be acquired by the following approach: representing all weight coefficients of model difference 8100 in a coordinate system in a natural order (index, weight); rearranging the represented weight coefficients by an interleaving sequence (which adjusts the order of the weight coefficients, making curve fitting easier); after obtaining the fitted curve, characterizing the fitted curve by one or more distributions. Then, parameters of the one or more distributions and the interleaving sequence used (if any) may be sent to the federated learning server. By sending the parameters of the one or more distributions and the interleaving sequence used instead of all weight coefficients of model difference 8100, the communication overhead may be further reduced. In some embodiments, the federated learning server will generate the model difference based on the received distributions, perform a deinterleaving operation according to the received interleaving sequence, and then superimpose the model difference on the second artificial intelligence model 1210-M on which the model difference is based, thereby obtaining the restored first artificial intelligence model 1210-N.

It should be understood that FIG. 8 illustrates only an exemplary embodiment. In other embodiments, model difference 8100 may be calculated and represented in other ways. For example, the process of FIG. 8 uses all the weight coefficients of the model difference to characterize the model difference, while in an alternative embodiment, the model difference may alternatively be characterized based on only a portion of the weight coefficients. This portion of weight coefficients may include, for example, partial weight coefficients that are obtained after pruning the model, or top-k weight coefficients of the model, or weight coefficients of the model that are above a certain threshold, or weight coefficients of a few certain layers of the model, etc. The model difference may be characterized by any other appropriate approach.

FIG. 9 illustrates a schematic diagram 9000 of resource allocation according to some embodiments of the present disclosure. The schematic diagram is applicable to a Wi-Fi system, in which the frequency band available to Wi-Fi is divided into different frequency sections to be allocated to different channels. In the Wi-Fi system, bandwidths of the frequency sections may be different. In FIG. 9, the horizontal axis may represent frequency, and the vertical axis may represent the bandwidth allocated to each frequency section. When a bandwidth of 160MHz is adopted, there may be two divided non-overlapping frequency sections, B1 and B2. When a bandwidth of 80MHz is adopted, there may be four divided non-overlapping frequency sections BB1, BB2, BB3, and BB4. When a bandwidth of 40MHz is adopted, there may be eight divided non-overlapping frequency sections BBB1, BBB2, BBB3, BBB4, BBB5, BBB6, BBB7, and BBB8. When a bandwidth of 20MHz is adopted, there may be 16 divided non-overlapping frequency sections. In some embodiments, in the Wi-Fi system, a particular UE may broadcast, on a Wi-Fi channel allocated to the particular UE, a set of model parameters of a local model of the particular UE after completing local model training. After monitoring the set of model parameters, another UE may decide, according to the model distance between the local model trained by the other UE and the received local model, whether to change the Wi-Fi channel the other UE is using. Specifically, if the model distance is less than a predetermined model distance threshold, the other UE may use the same Wi-Fi channel as the particular UE. If the model distance is not less than the predetermined model distance threshold, the other UE may use a different Wi-Fi channel from that of the particular UE. In this way, multiple UEs having similar local models may be grouped into a same Wi-Fi channel, and those UEs may be regarded as one group. Different resource sets of different groups may be associated with different non-overlapping frequency sections in the frequency sections described above. In one example, the first resource set 1400A of FIG. 1A may be associated with frequency section B1. UEs 120-1 and 120-2 in group 130A may communicate on frequency section B1. The second resource set 1400B may be associated with a frequency section that is selected from B2, BB3-BB4, BBB5-BBB8 or any other available frequency section that does not overlap with B1. UEs 120-3, 120-4 and 120-5 in group 130B may communicate on the selected frequency section. In another example, the first resource set 1400A of FIG. 1A may be associated with frequency section BB1, while the second resource set 1400B may be associated with any of B2, BB2, BB3-BB4, BBB5-BBB8 or any other available frequency section that does not overlap with BB1. It should be understood that these examples are all schematic. In other embodiments, other methods may be used to allocate the first resource set 1400A and the second resource set 1400B based on the frequency section division of FIG. 9. In addition, the federated learning may have more than two resource sets, which are non-overlappingly distributed across the various frequency sections illustrated in FIG. 9.

FIG. 10 illustrates a block diagram of a cellular system 1000 in which the technologies according to some embodiments of the present disclosure may be implemented. System 1000 may include a service-based architecture. The architecture may include one or more network element nodes, such as a network exposure function (NEF), a network repository function (NRF), a unified data management function (UDM), a policy control function (PCF), a network slice selection function (NSSF), an authentication service function (AUSF), an authentication management function (AMF), and a session management function (SMF). In system 1000, various types of UEs (e.g., UE 120 in FIG. 1A) may be connected to network side through a base station (e.g., a gNB). In some embodiments, a federated learning server (e.g., server 110 in FIG. 1A) may be deployed at an application function (AF). Each UE may access a data network (DN) through a gNB and a user plane function (UPF) and link to the AF. Each UE may send a local model and/or a model difference to the federated learning server through the links. The federated learning server may group individual UEs based on the model distances. In some embodiments, the federated learning server may send a grouping result via the PCF. Then, a management policy for UE sidelinks, such as resource configurations for UEs in each group, may be determined based on the grouping result. The management policy of the UE sidelinks, which is based on the grouping result, may be sent to the gNB through the AMF. The gNB may change use of a sidelink resource pool under Mode II (e.g., the autonomous mode) associated with the sidelink resources, so that each group is allocated with sidelink resources that are specific to the group. In other embodiments, a control mechanism of Mode I (e.g., the centralized mode) may be utilized to directly provide sidelink resources between multiple UEs of a same group. For example, the base station may divide the sidelink resource pool into a plurality of subsets, each of which may be allocated to a respective group. Generally, the sidelink resource pool may be allocated based on a geographic location area. According to an embodiment of the present disclosure, a sidelink resource pool that is allocated based on the geographic location area may be subdivided into one or more group-specific sidelink resource subsets in accordance with the grouping of UEs. The base station may include the result of the resource allocation in an appropriate signaling (e.g., RRC signaling) to notify one or more UEs in a respective group. In an alternative embodiment, the federated learning server may be located at another residence in system 1000. Accordingly, the management policy of the UE sidelinks may be issued in any other appropriate manner.

FIG. 11 illustrates an exemplary process 1100for screening UE(s) that participate as a member in federated learning according to some embodiments of the present disclosure. In some scenarios, process 1100 may be implemented in a cellular system (e.g., cellular system 1000 of FIG. 10).

Process 1100 may start with step 1101. In this step, the AF may be configured to send a request to the NEF. The request may be a subscription request for subscribing a member selection assistance functionality with the NEF. For example, the AF may send the subscription request by sending a Nnef_UEMemberSelectionAssistance_subscribe request to the NEF. In other examples, the AF may alternatively send the subscription request in other ways. The request may include a list of target UEs and one or more criteria for screening UE membership. Optionally, the request may further include one or more time windows.

According to some embodiments of the present disclosure, the one or more criteria for screening UE membership included in the request of step 1101 may include one or more of optional example criteria as shown in Table 1. Those optional example criteria include, but are not limited to, QoS, an access type and/or an RAT type of a PDU session, an end-to-end data volume transmission time, a current UE location, a historical UE location, a UE direction, etc. Preferably, a specific optional example criterion may include a criterion associated with a UE sidelink. This UE sidelink based criterion may include which of the UEs may be able to establish or have already established a sidelink therebetween. Optionally, the UE sidelink based criterion may further include the quality of the sidelink. In some embodiments, the UE sidelink based criterion may be used to screen member UEs that will be selected to participate in the federated learning. In some embodiments, the UE sidelink based criterion may further be used to group the member UEs. It should be understood that the optional example criteria shown in Table 1 are merely examples rather than limitations. In other embodiments, other optional example criteria may be used.

**Table 1 Example Screening Criteria**

| Criteria for screening UE membership | Description of screening criteria | Information for UE screening |
|---|---|---|
| QoS | The QoS of the selected UE matches or exceeds QoS of the screening criteria | |
| End-to-end data volume transmission time | Indicating end-to-end data volume transmission time, which refers to a time to | Service Operation: Nnwdaf_AnalyticsSubscription/Nnwdaf_ AnalyticsInfo |
| | complete the transmission of a specified amount of data between UE and AF | Filter: Analytics ID = End-to-end data volume transmission time |
| Current UE location | Indicating a specific area where the selected UE is currently located. | Service Operation: Namf_EventExposure |
| | | Filter: List of GPSIs or SUPIs |
| Historical UE location | Indicating a specific area where the selected UE appeared in a historical time period | Service Operation: Nnwdaf_AnalyticsSubscription |
| | | Filter: Analytics ID = UE Mobility, |
| | | Filter includes "Visited AoI = Target AOI" and "target period = historical nomadic period" |
| UE direction | Indicating the selected UE should include different moving directions | Service Operation: Nnwdaf_AnalyticsSubscription |
| | | Filter : Analytics ID=UE mobility, direction |
| UE sidelink | Indicating a sidelink has been established or can be established between the selected UEs | |

Process 1100 may proceed to step 1102. In this step, the NEF may be configured to verify the request from the AF and map the one or more criteria for screening UE membership contained in the request to corresponding service operations. Specifically, the NEF may verify authorization of the AF request, identify information that needs to be collected, and perform respective service operations according to the criteria for screening UE membership provided by the AF. Table 1 further shows example service operations corresponding to optional example criteria. It should be understood that the illustrated service operations are merely examples, rather than limitations. In other embodiments, each optional example criterion may correspond to an alternative service operation.

Process 1100 may proceed to step 1103. In this step, the NEF may be configured to interact with one or more 5G core network functions (5GC NFs) to collect the information required. These interactions may be performed through respective service operations. The one or more 5GC NFs with which the NEF interacts may be determined based at least in part on the one or more criteria for screening UE membership as indicated in the request of step 1101. The one or more 5GC network functions may be distributed across components of a cellular system (such as cellular system 1000 of FIG. 10). The collected information may include those identified by the NEF in step 1102. The interaction between the NEF and the one or more 5GC NFs may be based at least in part on the one or more criteria for screening UE membership as indicated in the request of step 1101.

Process 1100 may proceed to step 1104. In this step, the NEF may be configured to integrate the collected information and derive a list of candidate UEs. For example, based at least in part on the information collected from other 5GC NFs in step 1103, the NEF may integrate all the information collected from the other 5GC NFs, to derive a list of candidate UEs that may meet the criteria for screening UE membership indicated in the AF request of step 1101. The list of candidate UEs may include one or more candidate UEs that are selected to participate in the federated learning. The one or more candidate UEs may be selected from the list of target UEs. For example, based on the collected information, any UE (if any) in the list of target UEs that does not meet the criteria for screening UE membership may be excluded and thus not included in the list of candidate UEs. In some embodiments, the list of candidate UEs may further be grouped based on the collected information.

Process 1100 may proceed to step 1105. In this step, the NEF may be configured to notify the AF of the list of candidate UEs. As an example, the NEF may notify the AF of the list of candidate UEs by sending a Nnef_UEMemberSelectionAssistance_Notify request to the AF. In other examples, the NEF may notify the AF of the list of candidate UEs in other ways. Preferably, optional additional information may be sent to the AF together with the list of candidate UEs for one or more purposes. In some embodiments, the additional information may include sidelink information. The sidelink information may indicate which UEs in the list of candidate UEs have established or can establish sidelinks therebetween. Optionally, the sidelink information may further indicate the quality of the sidelinks between the UEs. The AF may group the UEs based at least in part on the sidelink information, as described above. In some embodiments, the additional information may include UE location information. The UE location information may indicate the locations of individual UEs in the list of candidate UEs, distances between the individual UEs, or distances of the individual UEs from a specified geographical location. The AF may group the UEs based at least in part on the UE location information, as described above. Additionally or alternatively, the sidelink information may further include one or more additional information that may be used to facilitate the AF to group the UEs. Such additional information may be used in combination with other information when grouping the UEs. In some embodiments, the grouping may be performed by a federated learning server that resides on or connected to the AF. In an alternative embodiment, the grouping is not performed by the AF but by the NEF. In this case, the NEF may group the candidate UEs based on the collected information (e.g., sidelink information) in step 1104. The result of the grouping may be sent to the AF, as part of the list of candidate UEs or as the additional information in step 1105. For example, the NEF may send one or more lists of candidate UEs to the AF, each list corresponding to one group of UEs.

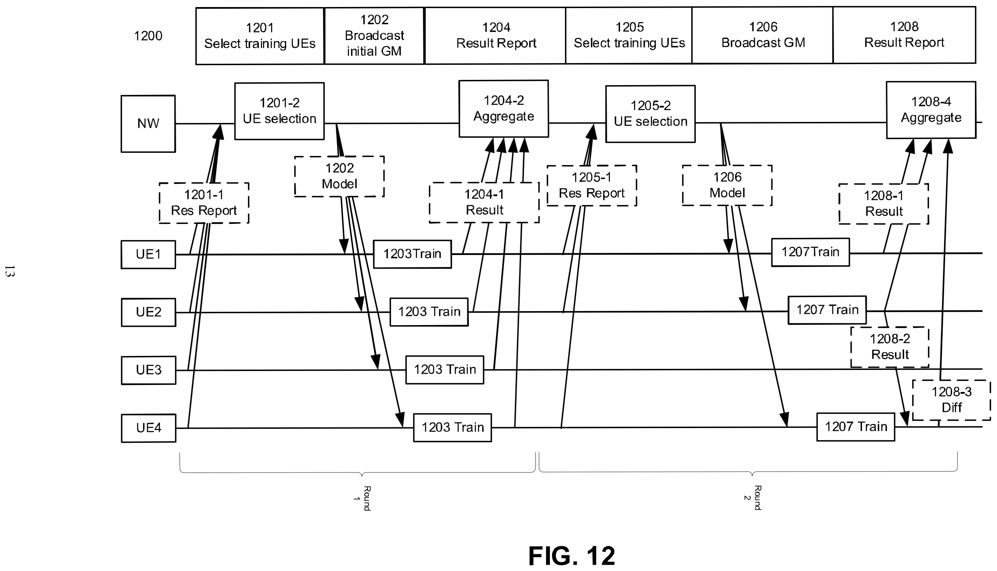

FIG. 12 depicts an exemplary process 1200 of federated learning according to some embodiments of the present disclosure. Process 1200 may be implemented in a cellular system. In FIG. 12, a network-side device (NW) is shown, which may be implemented as network-side device 110 described above. In addition, four UEs (UE1-UE4) are shown, each of which may be implemented as UE 120 described above. Those skilled in the art may understand that, other embodiments may include more or fewer UEs. In some embodiments, the federated learning server may reside on or be connected to the NW. In other words, the NW may, on behalf of the federated learning server, interface with the UEs that perform model training.

Process 1200 may start with step 1201. In this step, the NW may be configured to select training UEs for performing model training. In an optional embodiment, step 1201 may include sub-step 1201-1 and sub-step 1201-2. In sub-step 1201-1, UE1-UE4 may be configured to report UE resources to the NW. In sub-step 1201-2, the NW may be configured to select, from candidate UE1-UE4, training UEs to be used for performing model training. The selection may be based at least in part on the reported UE resources. In this example, UE1-UE4 are all selected as training UEs.

In step 1202, the NW may be configured to distribute a global model to the selected training UEs (e.g., UE1-UE4). The global model may be broadcast or multicast to the selected training UEs through a base station of a cellular network (e.g., a 5G network). If the current training round is the first training round of the federated learning (or in other words, the initial training round), the distributed global model may be an initial global model, as described in step 1202. If the current training round occurs after the first training round of the federated learning, the distributed global model may be an aggregated global model, as described in step 1206. The aggregated global model may be obtained based on aggregation of training results of the UEs.

In response to receiving the global model distributed by the NW, each of the training UEs (e.g., UE1-UE4) may train the global model (or a portion of the global model) using local data of that UE in step 1203. Through the model training, each training UE may obtain a local model associated with the UE.

In step 1204, training result reporting may be performed. Specifically, each of the training UEs (e.g., UE1-UE4) may send model parameters of the trained local model to the NW in sub-step 1204-1. In some embodiments, the model parameters may be sent in the form of gradients. A gradient may represent a difference between the trained local model and the model before training. For example, for one or more model parameters describing a weight, each training UE (e.g., UE1-UE4) may send the gradient of the weight to the NW, which helps reduce the amount of data to be sent. In step 1204-2, the NW may aggregate the training results received in step 1204-1 to generate the aggregated global model.

Then, the next training round of the federated learning may be performed. Process 1200 may proceed to step 1205. In this step, the NW may be configured to select training UEs for performing model training. Similar to sub-step 1201-1, the UEs may be configured to report UE resources to the NW in sub-step 1205-1. In the example shown, UE1, UE2, and UE4 report UE resources to the NW, while UE3 does not (because UE3 may have decided to exit the federated learning). In sub-step 1205-2, as an example, the NW selects UE1, UE2, and UE4 as training UEs for performing model training.

According to some embodiments of the present disclosure, the NW may additionally group the selected training UEs. For example, based on training results (e.g., local models) reported by each training UE in step 1204-1, the NW may determine model distances between the local models of the training UEs. The NW may at least apply the grouping criteria based on the model distance, as described above. For example, the NW may group multiple UEs whose model distances are less than a predetermined model distance threshold into a same group. As an alternative or additional embodiment, the NW may apply one or more other grouping criteria.

In step 1206, the NW may be configured to distribute the global model to the selected training UEs (e.g., UE1, UE2, UE4). Since the current training round occurs after the first training round of the federated learning, the distributed global model may be an aggregated global model, such as the aggregated global model generated in sub-step 1204-2.

According to some embodiments of the present disclosure, in addition to sending the aggregated global model, the NW may further send the grouping result of the UEs to the selected training UEs. In the example shown, the grouping result may indicate that UE2 and UE4 are divided into the same group, while UE1 is divided into another group. In other embodiments, other grouping results are possible without limitation.

In step 1207, each of the selected training UEs may perform model training. For the received aggregated global model, each training UE may perform further training on the global model (or a portion of the global model) using local data of the UE. Through the model training, each training UE may obtain a local model that is potentially better than the corresponding local model that was trained in step 1203.

In step 1208, training result reporting may be performed. Since the training UEs (e.g., UE1, UE2, and UE4) participating in federated learning have been grouped, the operation in step 1208 is different from that in step 1204. Specifically, only a particular UE in each group is configured to report its local model to the NW, while other UEs in the group are configured to report model differences between the UEs and the particular UE to the NW.

In the example of FIG. 12, for the group consisting of UE2 and UE4, UE2 may be selected as the particular UE for the group. For example, UE2 may be selected as the particular UE for the group, based on the fact that UE2 completes the model training of step 1207 faster than UE4. Accordingly, UE2 may be configured to send the local model trained by the UE in step 1207 to the NW in sub-step 1208-1. UE2 may further be configured to report the local model trained by UE2 in step 1207 to other UEs (e.g., UE4) in the same group in sub-step 1208-2. In some embodiments, the local model sent by UE2 may be represented by gradients of model parameters, such as gradients of weights. In some embodiments, only significant gradients (e.g., whose values exceed a specified threshold) may be sent, while insignificant gradients may be ignored. In sub-step 1208-3, UE4 may be configured to send a model difference to the NW. The model difference describes the difference between the local model trained by UE4 in step 1207 and the local model trained by UE2 in step 1207. The model difference may be determined by UE4 based on the model received in sub-step 1208-2 and the local model of UE4. In some embodiments, the model difference sent by UE4 to the NW may be differences in gradients of the weights.

For the group to which UE1 belongs, since the group only includes a single UE1, UE1 may be the particular UE for the group. Accordingly, UE1 may be configured to send the local model trained by the UE in step 1207 to the NW in sub-step 1208-1.

In sub-step 1208-4, the NW may be configured to perform model aggregation based at least in part on the local models and model differences received from the UEs, thereby obtaining the aggregated global model. For example, the NW may aggregate the local models (e.g., gradients of weights) reported by UE1 and UE2 and the model differences (e.g., gradient differences) reported by UE4. The aggregated global model may be distributed to the selected one or more training UEs in the next training round (not shown).

Process 1200 may repeatedly perform one or more training rounds until an end condition is reached. In some embodiments, the end condition may include reaching a specified number of training rounds. In some embodiments, the end condition may include the resulting global model reaching a predetermined performance condition. In response to reaching the end condition, the NW may provide the latest aggregated global model to one or more users that will use the model.

It should be understood that what is described above is merely an exemplary embodiment of process 1200. In some embodiments, one or more steps in process 1200 are optional and not necessarily required. For example, when the change in one or more conditions associated with the UE is not significant, the step of selecting training UEs (e.g., step 1205) may be omitted in one or more training rounds. In some embodiments, process 1200 may include one or more optional steps that are not shown. For example, the step of selecting training UEs may include one or more of the various steps described with respect to FIG. 11. In some embodiments, the global model sent by the NW to the UE may be a sparse model. When performing model training, the UE may perform sparse-to-dense model training to obtain a dense local model. In this case, the NW may perform compression aggregation based on the collected dense local models to obtain a sparse global model, as the aggregated global model.

The present disclosure provides a device, method and system for machine learning. According to some aspects of the technology of the present disclosure, by exchanging local models between UEs and removing model redundancy before uploading the models, it is possible to reduce occupancy of uplink resources. According to some aspects of the technology of the present disclosure, multiple UEs to exchange local models may be specifically selected, to maximize the removed model redundancy. According to some aspects of the technology of the present disclosure, high-quality communication resources may be provided for multiple UEs that generate similar local models, thereby improving training efficiency of the entire system. Various aspects of the present disclosure may be implemented individually or in combination, without limitation. The present disclosure provides improved technologies for machine learning including these and other aspects.

### 5. Application Examples

The technology of the present disclosure can be applied to various products.

For example, a control side electronic device according to an embodiment of the present disclosure may be implemented as or included in various control devices/base stations. For example, a transmitting device and a terminal device according to an embodiment of the present disclosure may be implemented as or included in various terminal devices.

For example, the control device/base station mentioned in the present disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as IAB (Integrated Access Backhaul). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently. For example, the terminal devices mentioned in the present disclosure may be implemented as mobile terminals (such as smart phones, tablet personal computers (PCs), notebook PCs, portable game terminals, portable/dongle-type mobile routers and digital cameras) or vehicle-mounted terminals (such as OBU) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

The exemplary embodiments of the present disclosure are described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

It should be understood that the machine-readable storage medium or the machine-executable instructions in the program product according to the embodiments of the present disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 6. Exemplary Embodiments

1. An electronic device used for a first UE, the electronic device comprising: a processing circuit configured to: obtain a first artificial intelligence model trained by the first UE; receive a second artificial intelligence model trained by a second UE; determine a model difference between the second artificial intelligence model and the first artificial intelligence model; and send the model difference to a federated learning server.
2. The electronic device of embodiment 1, wherein the model difference is sent to the federated learning server when an uplink quality of the first UE is lower than a predetermined link quality condition.
3. The electronic device of embodiment 1, wherein the model difference is sent to the federated learning server when a model distance corresponding to the model difference is less than a predetermined model distance threshold.
4. The electronic device of embodiment 3, wherein the first UE and the second UE belong to a same group.
5. The electronic device of embodiment 4, wherein the group is determined by the federated learning server based on the model distance.
6. The electronic device of embodiment 4, wherein the group is determined by the first UE or the second UE based on the model distance.
7. The electronic device of embodiment 4, wherein the processing circuit is further configured to: communicate with the second UE using a resource that is specific to the group.
8. The electronic device of embodiment 7, wherein the processing circuit is further configured to: receive resource configuration information from a network-side device, wherein the resource configuration information indicates a sidelink resource that is specific to the group and that is for the communication between the first UE and the second UE.
9. The electronic device of embodiment 8, wherein the sidelink resource comprises a resource pool that is specific to the group, and wherein the resource pool is allocated based on a training task of federated learning.
10. The electronic device of embodiment 7, wherein the processing circuit is further configured to: in response to a determination that the first UE and the second UE belong to the same group, maintain an initial communication channel between the first UE and the second UE; and in response to a determination that the first UE and a third UE do not belong to the same group, deactivate an initial communication channel between the first UE and the third UE.
11. The electronic device of embodiment 6, wherein the second UE is a UE in the group that has earliest completed a current training round of federated learning.
12. The electronic device of embodiment 1, wherein the processing circuit is further configured to: in response to a particular value of one or more values that represent the model difference being greater than a predetermined transmission threshold, include the particular value in the model difference to be sent; and in response to the particular value being not greater than the predetermined transmission threshold, not include the particular value in the model difference to be sent.
13. The electronic device of embodiment 1, wherein the processing circuit is further configured to: receive a global artificial intelligence model from the federated learning server, wherein the global artificial intelligence model is generated by aggregating at least the model difference received from the first UE and the second artificial intelligence model received from the second UE.
14. An electronic device used for network side, the electronic device comprising: a processing circuit configured to: receive a first artificial intelligence model from a first UE, the first artificial intelligence model being trained by the first UE in a federated learning process; receive a model difference from a second UE, the model difference representing a difference between the first artificial intelligence model and a second artificial intelligence model that is trained by the second UE in the federated learning process; and generate a global artificial intelligence model based on aggregating at least the first artificial intelligence model and the model difference.
15. The electronic device of embodiment 14, wherein the model difference is received when an uplink quality of the second UE is less than a predetermined link quality condition.
16. The electronic device of embodiment 14, wherein the model difference is received when a model distance corresponding to the model difference is less than a predetermined model distance threshold.
17. The electronic device of embodiment 16, wherein the first UE and the second UE belong to a same group.
18. The electronic device of embodiment 17, wherein the group is determined by the processing circuit based on the model distance.
19. The electronic device of embodiment 17, wherein the group is determined by the first UE or the second UE based on the model distance.
20. The electronic device of embodiment 17, wherein the processing circuit is further configured to: allocate to the group a resource that is specific to the group.
21. The electronic device of embodiment 20, wherein the resource comprises a sidelink resource that is specific to the group and that is for communication between different UEs in the group.
22. The electronic device of embodiment 21, wherein the sidelink resource includes a resource pool that is specific to the group, and wherein the resource pool is allocated based on a training task of the federated learning process.
23. The electronic device of embodiment 18, wherein the second UE is a UE in the group that has earliest completed a current training round of federated learning.
24. The electronic device of embodiment 14, wherein a particular value of one or more values that represent the model difference is received when the particular value is greater than a predetermined transmission threshold.
25. The electronic device of embodiment 14, wherein the processing circuit is further configured to: send the global artificial intelligence model to the first UE and the second UE.
26. A method performed by a first UE, the method comprising: obtaining a first artificial intelligence model trained by the first UE; receiving a second artificial intelligence model trained by a second UE; determining a model difference between the second artificial intelligence model and the first artificial intelligence model; and sending the model difference to a federated learning server.
27. A method performed by an electronic device on a network side, the method comprising: receiving a first artificial intelligence model from a first UE, the first artificial intelligence model being trained by the first UE in a federated learning process; receiving a model difference from a second UE, the model difference representing a difference between the first artificial intelligence model and a second artificial intelligence model trained by the second UE in the federated learning process; and generating a global artificial intelligence model based on aggregating at least the first artificial intelligence model and the model difference.
28. A computer-readable storage medium having one or more instructions stored thereon, which, when executed by one or more processing circuits of an electronic device, cause the electronic device to perform the method of any of embodiments 26 to 27.
29. A computer program product comprising a computer program, which, when executed by a processor, performs the method of any of embodiments 26 to 27.
30. An apparatus comprising means for performing the method of any of embodiments 26 to 27.

## Claims

1. An electronic device used for a first UE, the electronic device comprising:
a processing circuit configured to:
obtain a first artificial intelligence model trained by the first UE;
receive a second artificial intelligence model trained by a second UE;
determine a model difference between the second artificial intelligence model and the first artificial intelligence model; and
send the model difference to a federated learning server.

2. The electronic device of claim 1, wherein the model difference is sent to the federated learning server when an uplink quality of the first UE is lower than a predetermined link quality condition.

3. The electronic device of claim 1, wherein the model difference is sent to the federated learning server when a model distance corresponding to the model difference is less than a predetermined model distance threshold.

4. The electronic device of claim 3, wherein the first UE and the second UE belong to a same group.

5. The electronic device of claim 4, wherein the group is determined by the federated learning server based on the model distance.

6. The electronic device of claim 4, wherein the group is determined by the first UE or the second UE based on the model distance.

7. The electronic device of claim 4, wherein the processing circuit is further configured to:
communicate with the second UE using a resource that is specific to the group.

8. The electronic device of claim 7, wherein the processing circuit is further configured to:
receive resource configuration information from a network-side device, wherein the resource configuration information indicates a sidelink resource that is specific to the group and that is for the communication between the first UE and the second UE.

9. The electronic device of claim 8, wherein the sidelink resource comprises a resource pool that is specific to the group, and wherein the resource pool is allocated based on a training task of federated learning.

10. The electronic device of claim 7, wherein the processing circuit is further configured to:
in response to a determination that the first UE and the second UE belong to the same group, maintain an initial communication channel between the first UE and the second UE; and
in response to a determination that the first UE and a third UE do not belong to the same group, deactivate an initial communication channel between the first UE and the third UE.

11. The electronic device of claim 6, wherein the second UE is a UE in the group that has earliest completed a current training round of federated learning.

12. The electronic device of claim 1, wherein the processing circuit is further configured to:
in response to a particular value of one or more values that represent the model difference being greater than a predetermined transmission threshold, include the particular value in the model difference to be sent; and
in response to the particular value being not greater than the predetermined transmission threshold, not include the particular value in the model difference to be sent.

13. The electronic device of claim 1, wherein the processing circuit is further configured to:
receive a global artificial intelligence model from the federated learning server, wherein the global artificial intelligence model is generated by aggregating at least the model difference received from the first UE and the second artificial intelligence model received from the second UE.

14. An electronic device used for network side, the electronic device comprising:
a processing circuit configured to:
receive a first artificial intelligence model from a first UE, the first artificial intelligence model being trained by the first UE in a federated learning process;
receive a model difference from a second UE, the model difference representing a difference between the first artificial intelligence model and a second artificial intelligence model that is trained by the second UE in the federated learning process; and
generate a global artificial intelligence model based on aggregating at least the first artificial intelligence model and the model difference.

15. The electronic device of claim 14, wherein the model difference is received when an uplink quality of the second UE is less than a predetermined link quality condition.

16. The electronic device of claim 14, wherein the model difference is received when a model distance corresponding to the model difference is less than a predetermined model distance threshold.

17. The electronic device of claim 16, wherein the first UE and the second UE belong to a same group.

18. The electronic device of claim 17, wherein the group is determined by the processing circuit based on the model distance.

19. The electronic device of claim 17, wherein the group is determined by the first UE or the second UE based on the model distance.

20. The electronic device of claim 17, wherein the processing circuit is further configured to: allocate to the group a resource that is specific to the group.

21. The electronic device of claim 20, wherein the resource comprises a sidelink resource that is specific to the group and that is for communication between different UEs in the group.

22. The electronic device of claim 21, wherein the sidelink resource includes a resource pool that is specific to the group, and wherein the resource pool is allocated based on a training task of the federated learning process.

23. The electronic device of claim 18, wherein the second UE is a UE in the group that has earliest completed a current training round of federated learning.

24. The electronic device of claim 14, wherein a particular value of one or more values that represent the model difference is received when the particular value is greater than a predetermined transmission threshold.

25. The electronic device of claim 14, wherein the processing circuit is further configured to: send the global artificial intelligence model to the first UE and the second UE.

26. A method performed by a first UE, the method comprising:
obtaining a first artificial intelligence model trained by the first UE;
receiving a second artificial intelligence model trained by a second UE;
determining a model difference between the second artificial intelligence model and the first artificial intelligence model; and
sending the model difference to a federated learning server.

27. A method performed by an electronic device on a network side, the method comprising:
receiving a first artificial intelligence model from a first UE, the first artificial intelligence model being trained by the first UE in a federated learning process;
receiving a model difference from a second UE, the model difference representing a difference between the first artificial intelligence model and a second artificial intelligence model trained by the second UE in the federated learning process; and
generating a global artificial intelligence model based on aggregating at least the first artificial intelligence model and the model difference.

28. A computer-readable storage medium having one or more instructions stored thereon, which, when executed by one or more processing circuits of an electronic device, cause the electronic device to perform the method of any of claims 26 to 27.

29. A computer program product comprising a computer program, which, when executed by a processor, performs the method of any of claims 26 to 27.

30. An apparatus comprising means for performing the method of any of claims 26 to 27.
